# EUROPEAN PATENT SPECIFICATION

(11) **EP 4 641 348 B1**
(45) Date of publication and mention of the grant of the patent: **14.10.2026**
(21) Application number: 24774181.2
(22) Date of filing: 20.03.2024
(51) Int. Cl.: G06F 1/16, G09F 9/30, H04M 1/02, F16C 11/04

(54) **FOLDING MECHANISM AND FOLDABLE MOBILE TERMINAL**
KLAPPMECHANISMUS UND KLAPPBARES MOBILES ENDGERÄT
MÉCANISME DE PLIAGE ET TERMINAL MOBILE PLIABLE

(30) Priority: 20.03.2023 CN 202310305448
(43) Date of publication of application: 29.10.2025
(73) Proprietor: Honor Device Co., Ltd., Shenzhen, Guangdong 518040 (CN)
(72) Inventor: DONG, Shaohong, Shenzhen, Guangdong 518040 (CN); PENG, Gaofeng, Shenzhen, Guangdong 518040 (CN); CHEN, Ruihao, Shenzhen, Guangdong 518040 (CN); GONG, Wenqiang, Shenzhen, Guangdong 518040 (CN)
(74) Representative: MERH-IP Matias Erny Reichl Hoffmann Patentanwälte PartG mbB
(86) International application number: PCT/CN2024/082833
(87) International publication number: WO 2024/193616

(56) References cited:
- CN-A- 113 067 923
- CN-A- 113 194 183
- CN-A- 113 472 919
- CN-A- 114 500 699
- CN-A- 116 480 680

## Description

This application claims priority to Chinese Patent Application No. 202310305448.3, filed with the China National Intellectual Property Administration on March 20, 2023 and entitled "FOLDING MECHANISM AND FOLDABLE MOBILE TERMINAL".

### TECHNICAL FIELD

This application relates to the field of mobile terminal technologies, and in particular, to a folding mechanism and a foldable mobile terminal.

### BACKGROUND

With the development of flexible screen technologies, a foldable mobile terminal has emerged. The foldable mobile terminal generally includes a left housing, a right housing, a folding mechanism, and a flexible screen. The flexible screen covers the left housing and the right housing, and the left housing and the right housing are both rotatable relative to the folding mechanism to be folded together or unfolded.

In the current technology, the folding mechanism mainly includes a main support, a swing arm, a left door plate, and a right door plate. The left door plate and the right door plate are respectively rotatably connected to two sides of the main support through the swing arm, and the left housing and the right housing are respectively fixed to the left door plate and the right door plate. The folding mechanism is generally assembled from a plurality of components and has a complex structure, and tolerances of various components cumulatively affect a movement accuracy of the swing arm.

CN 113 194 183 A describes a folding mechanism comprising a base, a first housing seat, a second housing seat, a first screen support plate, a second screen support plate and a third screen support plate.

### SUMMARY

The invention is set out in the appended claims.

Beneficial effects of the terminal device provided in embodiments of this application relative to the existing technology are similar to those of the folding mechanism provided in embodiments of the first aspect of this application relative to the existing technology. Details are not described herein again.

### BRIEF DESCRIPTION OF DRAWINGS

FIG. 1 is a schematic structural diagram of a foldable mobile terminal in an unfolded state according to an embodiment of this application;
FIG. 2 is a schematic structural diagram of the foldable mobile terminal shown in FIG. 1 in a folded state;
FIG. 3 is a schematic three-dimensional view of a folding mechanism in an unfolded state according to an embodiment of this application;
FIG. 4 is a partial schematic view of the folding mechanism shown in FIG. 3;
FIG. 5 is a schematic three-dimensional view of the folding mechanism shown in FIG. 3 in a half-unfolded state;
FIG. 6 is a schematic three-dimensional view of the folding mechanism shown in FIG. 3 in a folded state;
FIG. 7 is a schematic three-dimensional exploded view of the folding mechanism shown in FIG. 3;
FIG. 8 is a schematic three-dimensional view of a first support in the folding mechanism shown in FIG. 3;
FIG. 9 is a schematic three-dimensional view of the first support shown in FIG. 8 from another angle;
FIG. 10 is a schematic three-dimensional view of the first support shown in FIG. 8 from yet another angle;
FIG. 11 is a schematic three-dimensional view of a first swing arm in the folding mechanism shown in FIG. 3;
FIG. 12 is a schematic three-dimensional view of the first swing arm shown in FIG. 11 from another angle;
FIG. 13 is a sectional view of the folding mechanism shown in FIG. 3 along a first mating portion in an unfolded state;
FIG. 14 is a sectional view of the folding mechanism shown in FIG. 3 along a first mating portion in a folded state;
FIG. 15 is a sectional view of the folding mechanism shown in FIG. 3 along a second mating portion in an unfolded state;
FIG. 16 is a sectional view of the folding mechanism shown in FIG. 3 along a second mating portion in a folded state;
FIG. 17 is a sectional view of the folding mechanism shown in FIG. 6 along a first stop block;
FIG. 18 is a sectional view of the folding mechanism shown in FIG. 3 along a first swing arm;
FIG. 19 is a sectional view of the folding mechanism shown in FIG. 3 along a second swing arm;
FIG. 20 is a sectional view of the folding mechanism shown in FIG. 6 along a second swing arm;
FIG. 21 is a schematic assembly diagram of a first support and a second support in the folding mechanism shown in FIG. 3;
FIG. 22 is a cross-sectional view of the first support and the second support shown in FIG. 21 taken along line A-A;
FIG. 23 is a partial schematic view of the folding mechanism shown in FIG. 3;
FIG. 24 is a side view of the folding mechanism shown in FIG. 6;
FIG. 25 is a schematic three-dimensional view of a folding mechanism in an unfolded state according to another embodiment of this application;
FIG. 26 is a schematic three-dimensional view of the folding mechanism shown in FIG. 25 in a folded state;
FIG. 27 is a three-dimensional exploded view of the folding mechanism shown in FIG. 25;
FIG. 28 is a schematic three-dimensional view of a first support in the folding mechanism shown in FIG. 25;
FIG. 29 is a schematic three-dimensional view of the first support shown in FIG. 28 from another angle;
FIG. 30 is a schematic three-dimensional view of the first support shown in FIG. 28 from yet another angle;
FIG. 31A is a top view of the first support shown in FIG. 28;
FIG. 31B is a bottom view of the first support shown in FIG. 28;
FIG. 32 is a schematic three-dimensional view of a first swing arm in the folding mechanism shown in FIG. 27;
FIG. 33 is a schematic three-dimensional view of the first swing arm shown in FIG. 32 from another angle;
FIG. 34 is a schematic three-dimensional view of a second swing arm in the folding mechanism shown in FIG. 27;
FIG. 35 is a schematic three-dimensional view of the second swing arm shown in FIG. 34 from another angle;
FIG. 36 is a sectional view of the folding mechanism shown in FIG. 25 along a first sliding groove surface in an unfolded state;
FIG. 37 is a sectional view of the folding mechanism shown in FIG. 25 along a first sliding groove surface in a folded state;
FIG. 38 is a sectional view of the folding mechanism shown in FIG. 25 along a second sliding groove surface in an unfolded state;
FIG. 39 is a sectional view of the folding mechanism shown in FIG. 25 along a second sliding groove surface in a folded state;
FIG. 40 is a sectional view of the folding mechanism shown in FIG. 25 along a third sliding groove surface in an unfolded state;
FIG. 41 is a sectional view of the folding mechanism shown in FIG. 25 along a third sliding groove surface in a folded state;
FIG. 42 is a sectional view of the folding mechanism shown in FIG. 25 along a fourth sliding groove surface in an unfolded state;
FIG. 43 is a sectional view of the folding mechanism shown in FIG. 25 along a fourth sliding groove surface in a folded state;
FIG. 44 is a sectional view of the folding mechanism shown in FIG. 25 along a first stop block in an unfolded state;
FIG. 45 is a sectional view of the folding mechanism shown in FIG. 25 along a third stop surface in an unfolded state;
FIG. 46 is a sectional view of the folding mechanism shown in FIG. 25 along a fourth stop surface in a folded state;
FIG. 47 is a schematic diagram of a joint of a first support and a second support in the folding mechanism shown in FIG. 25; and
FIG. 48 is a cross-sectional view of the first support and the second support shown in FIG. 47 taken along line B-B.

Reference numerals in the accompanying drawings:
1000. Foldable mobile terminal; 100. Folding mechanism; 200. Screen; 300. First housing; 400. Second housing;
10. First support; 10a. First side portion; 10b. Second side portion; 101. Outer surface;
11. First support body; 12. First boss; 121. Protrusion; 122. Extension; 13. Second boss; 111. Positioning surface; 112. Adhesive dispensing groove; 113. Support platform; 115. Second mounting hole;
141. First sliding groove surface; 142. Second sliding groove surface; 143. Rotating shaft hole; 144. Third sliding groove surface; 145. Fourth sliding groove surface; 146. Limiting surface;
15. Molding process slot; 16. Through hole; 17. Screen water drop avoidance groove; 18. Weight-reducing groove;
20. First swing arm; 21. First end; 22. Second end; 211. First surface; 2111. First mating portion; 212. Second surface; 2121. Second mating portion; 23. First mounting hole;
30. Second swing arm; 311. Third mating portion; 312. Fourth mating portion; 313. Damping structure;
41. Third swing arm; 42. Fourth swing arm;
51. First stop block; 511. First stop surface; 52. Second stop surface;
60. Second stop structure; 61 Third stop surface; 62. Fourth stop surface; 63. Second stop block;
70. Second support; 71. Positioning pin; 72. Positioning hole; 73. Stud; 74. Nut; 75. Fastening screw;
80. Connecting plate.

### DESCRIPTION OF EMBODIMENTS

Embodiments of this application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary, and are intended to explain this application and cannot be construed as a limitation to this application.

In the description of this application, it should be understood that orientation or position relationships indicated by the terms such as "length", "width", "thickness", "top", "bottom", "inner", "outer", "up", "down", "left", and "right" are based on orientation or position relationships shown in the accompanying drawings, and are used only for ease and brevity of illustration and description, rather than indicating or implying that the mentioned apparatus or component needs to have a particular orientation or needs be constructed and operated in a particular orientation. Therefore, such terms should not be construed as limiting of this application.

The terms such as "first", "second", "third", and "fourth" are used for distinctive descriptions only and should not be construed as indicating or implying relative importance or implicitly indicating a quantity of technical features indicated. For example, a first pushing portion and a second pushing portion are merely intended for distinguishing different pushing portions, and the sequence of the first pushing portion and the second pushing portion is not limited. The first pushing portion may also be referred to as a second pushing portion, and the second pushing portion may also be referred to as a first pushing portion without departing from the scope of the various described embodiments. In addition, the terms such as "first", "second", "third", and "fourth" do not limit that the indicated features are necessarily different.

In this application, unless otherwise explicitly specified or defined, the terms such as "connect" and "connection" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two components, or an interaction relationship between two components. A person of ordinary skill in the art may understand the specific meanings of the foregoing terms in this application according to specific situations.

In this application, "and/or" describes only an association relationship for describing associated objects and represents that three relationships may exist. For example, A and/or B may represent three cases, which are only A exists, both A and B exist, and only B exists. In addition, the character "/" in this specification generally indicates an "or" relationship between the associated objects.

It should be noted that, in this application, words such as "in an embodiment", an "example", or "for example" are used to represent giving an example, an illustration, or a description. In this application, any embodiment or design scheme described by using "in some embodiments", "exemplarily", or "for example" should not be explained as being more preferred or having more advantages than another embodiment or design scheme. Exactly, use of the terms such as "in an embodiment", an "example", or "for example" is intended to present a related concept in a specific manner.

To make objectives, technical solutions, and advantages of this application clearer, this application is further described in detail below with reference to accompanying drawings and embodiments.

In the current technology, the folding mechanism mainly includes a main support, a swing arm, a left door plate, and a right door plate. The left door plate and the right door plate are respectively rotatably connected to two sides of the main support through the swing arm, and the left housing and the right housing are respectively fixed to the left door plate and the right door plate. The folding mechanism is generally assembled from a plurality of components and has a complex structure, and tolerances of various components cumulatively affect a movement accuracy of the swing arm. For example, the main support includes a support and a cover plate that are assembled. The structure (for example, a rotating shaft hole) that is in rotation-fit with the swing arm is divided into two engagement parts, which are respectively processed on the support and the cover plate. A coaxiality of the two parts is difficult to be controlled, and a movement accuracy of the swing arm is affected.

In view of this, embodiments of this application provide a folding mechanism and a foldable mobile terminal, to improve a technical problem that a movement accuracy of a swing arm of a rotating shaft mechanism is not high in the related art.

The foldable mobile terminal 1000 provided in embodiments of this application may be a foldable mobile terminal product including a flexible display, such as a mobile phone, a tablet computer, a wearable device, an on-board device, an augmented reality (augmented reality, AR)/virtual reality (virtual reality, VR) device, a laptop computer, an ultramobile personal computer (ultramobile personal computer, UMPC), a netbook, or a personal digital assistant (personal digital assistant, PDA). A specific type of the foldable mobile terminal is not limited in embodiments of this application. In embodiments of this application, a description is made by using an example in which the mobile terminal 1000 is the mobile phone.

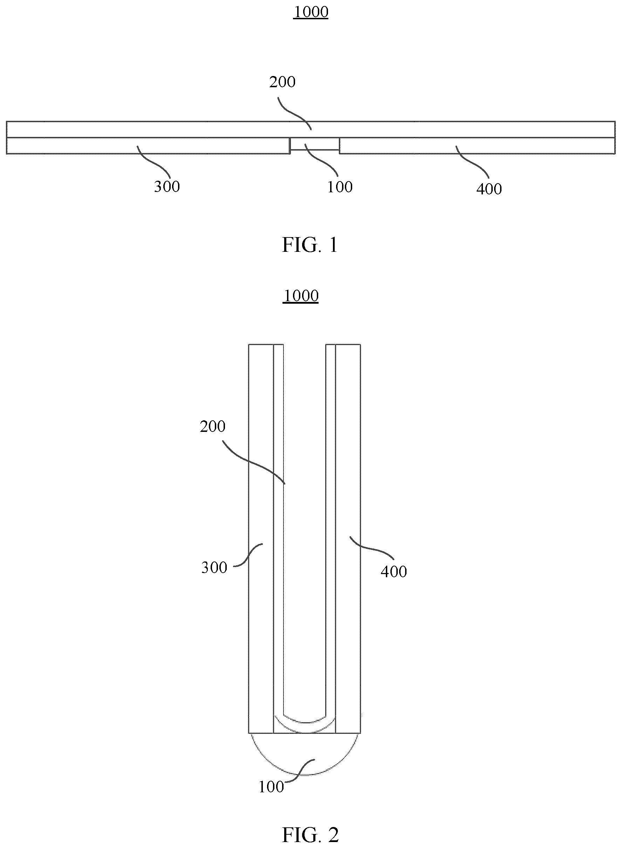

Refer to FIG. 1 and FIG. 2. FIG. 1 is a schematic structural diagram of a foldable mobile terminal 1000 in an unfolded state according to an embodiment of this application. FIG. 2 is a schematic structural diagram of the foldable mobile terminal 1000 shown in FIG. 1 in a folded state. The foldable mobile terminal 1000 includes a folding mechanism 100, a screen 200, a first housing 300, and a second housing 400. The folding mechanism 100 is connected between the first housing 300 and the second housing 400. The screen 200 is located a surface of the first housing 300, the second housing 400, and the folding mechanism 100. The screen 200 is respectively fixed to the first housing 300 and the second housing 400. The screen 200 is a flexible screen that can be bent. The foldable mobile terminal 1000 can relatively rotate the first housing 300 and the second housing 400 by using the folding mechanism 100, so that the first housing 300 and the second housing 400 are opened or closed, thereby implementing unfolding and folding of the foldable mobile terminal 1000.

FIG. 1 is a schematic structural diagram of the foldable mobile terminal 1000 in the unfolded state. The first housing 300 and the second housing 400 are substantially located in a same plane. The screen 200 is tiled on the surface of the first housing 300, the second housing 400, and the folding mechanism 100. It may be understood that, in some embodiments, when the foldable mobile terminal 1000 is in the unfolded state, the first housing 300 and the second housing 400 may have a specific included angle. In this case, the screen 200 is in a folded state.

FIG. 2 is a schematic structural diagram of the foldable mobile terminal 1000 in the folded state. The first housing 300 and the second housing 400 are substantially parallel to each other. The screen 200 is folded in a space defined by the first housing 300, the second housing 400, and the folding mechanism 100. It may be understood that, in some embodiments, a structure of the foldable mobile terminal 1000 in the folded state is not limited thereto. For example, the screen 200 may alternatively be located at an outer side of the first housing 300, the second housing 400, and the folding mechanism 100.

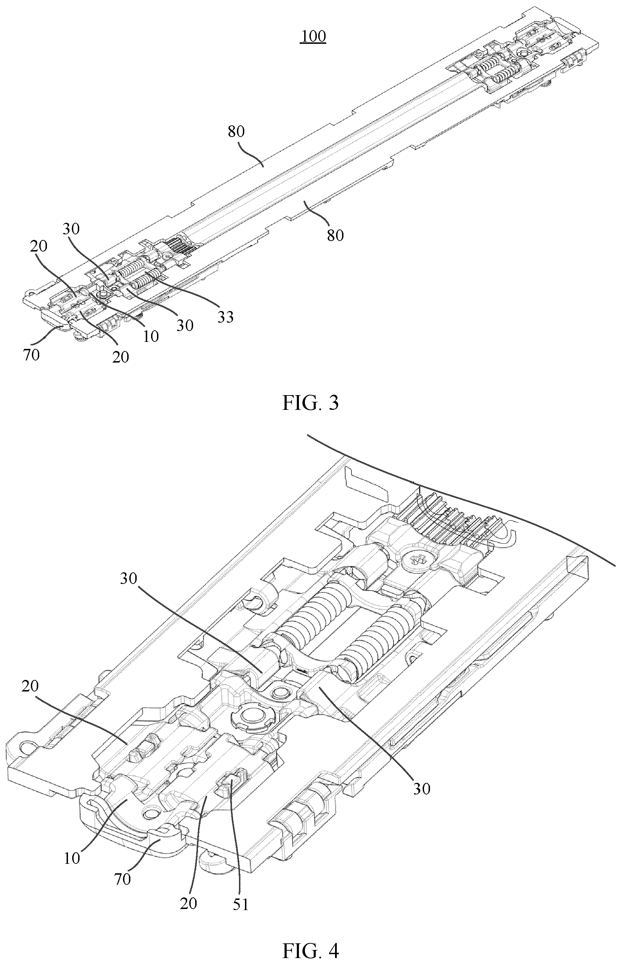

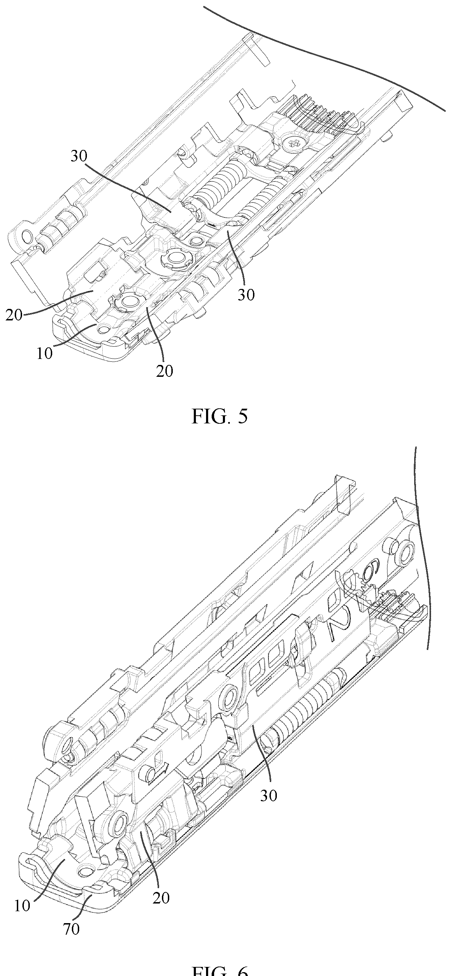

An embodiment of a first aspect of this application provides a folding mechanism 100. Referring to FIG. 3 to FIG. 7, the folding mechanism 100 includes a first support 10 and a first swing arm 20. The first swing arm 20 is rotatably connected to a side of the first support 10. The first swing arm 20 may be folded or unfolded relative to the first support 10.

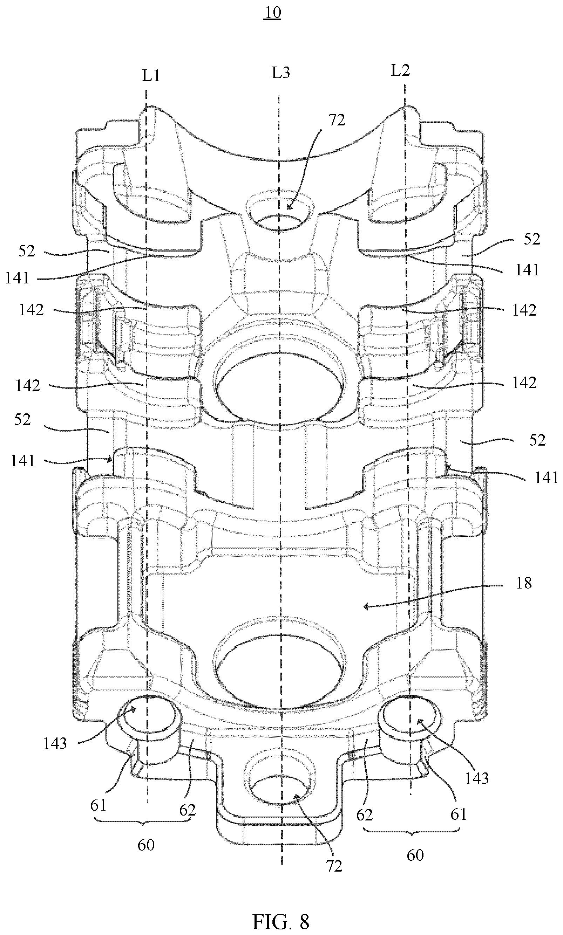

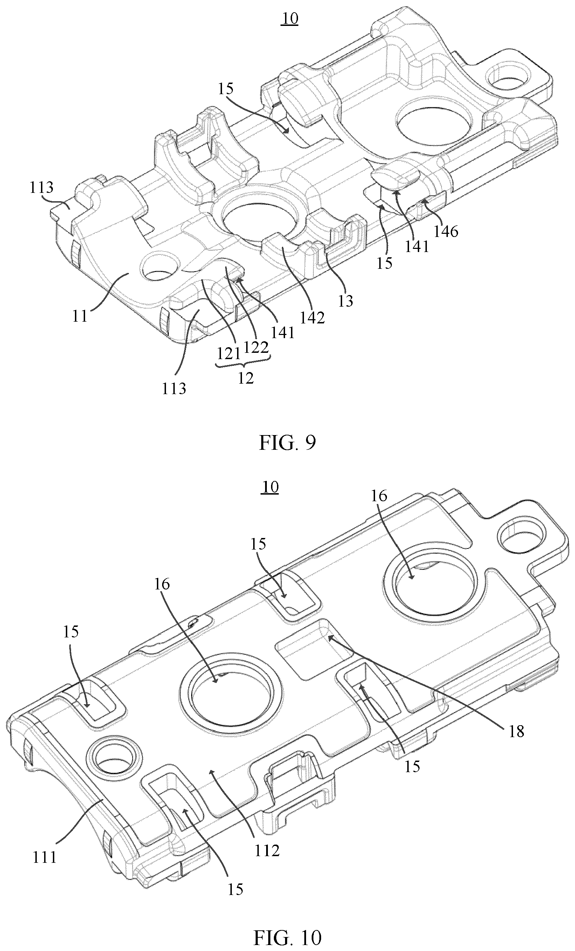

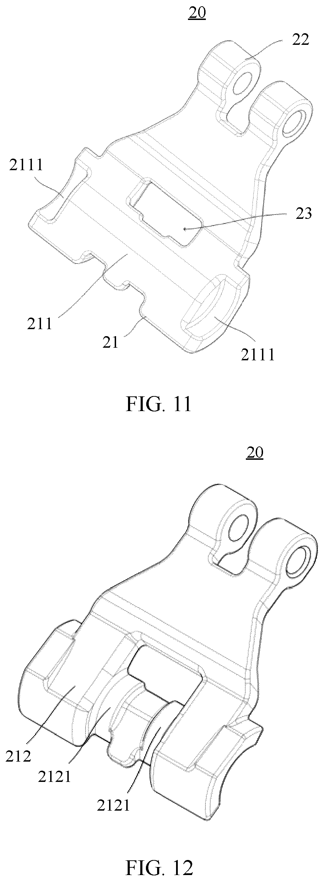

Referring to FIG. 8 and FIG. 9, a first sliding groove surface 141 and a second sliding groove surface 142 are integrally arranged on the first support 10. The first sliding groove surface 141 and the second sliding groove surface 142 are both arc surfaces and coaxially arranged. The first sliding groove surface 141 and the second sliding groove surface 142 are spaced apart from each other along an axial direction of the first sliding groove surface 141. Referring to FIG. 11 to FIG. 16, two sides of the first swing arm 20 are respectively in contact and rotation-fit with the first sliding groove surface 141 and the second sliding groove surface 142.

The first sliding groove surface 141 and the second sliding groove surface 142 are integrally arranged on the first support 10, and do not need to be assembled on the first support 10 through another part, thereby reducing a quantity of parts and an assembly process. The first support 10 may be integrally formed. It may be understood that if the first support 10 further includes another structure, at least the first sliding groove surface 141 and the second sliding groove surface 142 are integrally arranged on the first support 10.

The first sliding groove surface 141 and the second sliding groove surface 142 are both arc surfaces. The arc surface may include only one arc portion having a preset radius. In this case, the arc surface is a part of a cylindrical surface. The arc surface may also include a plurality of connected arc portions. In this case, the arc surface is a curved surface. In addition, the arc surface may be a smooth surface, or may be provided with a friction structure such as a protrusion. A radian of the first sliding groove surface 141 and a radian of the second sliding groove surface 142 may be the same or different, which may be adjusted based on a requirement.

The first sliding groove surface 141 and the second sliding groove surface 142 are coaxially arranged, which means that an axial direction of the first sliding groove surface 141 coincides with an axial direction of the second sliding groove surface 142. The first sliding groove surface 141 and the second sliding groove surface 142 are located on two sides of the first swing arm 20, which enables a function to guide and limit sliding of the first swing arm 20 and prevents disengagement of the first swing arm 20 from the first support 10. In addition, because the first sliding groove surface 141 and the second sliding groove surface 142 are coaxially arranged, the first swing arm 20 may be caused to rotate around the axial direction of the first sliding groove surface 141 and the axial direction of the second sliding groove surface 142.

In FIG. 8, a direction L1 is the axial direction of the first sliding groove surface 141, and the axial direction of the first sliding groove surface 141 is also the axial direction of the second sliding groove surface 142. The first sliding groove surface 141 and the second sliding groove surface 142 are not arranged exactly opposite to each other, but are spaced apart from each other along the axial direction of the first sliding groove surface 141. Correspondingly, a contact portion between the first swing arm 20 and the first sliding groove surface 141 and a contact portion between the first swing arm 20 and the second sliding groove surface 142 are also spaced apart from each other along the axial direction of the first sliding groove surface 141. The first sliding groove surface 141 and the second sliding groove surface 142 respectively face two sides of the first swing arm 20, so as to respectively limit the first swing arm 20 from two sides. The first sliding groove surface 141 and the second sliding groove surface 142 may have a same protruding direction. Further, a connection line direction between arc vertexes of the first sliding groove surface 141 and the second sliding groove surface 142 and the axis may be arranged parallel to each other.

In this way, the first sliding groove surface 141 and the second sliding groove surface 142 may guide the rotation of the first swing arm 20 within a specific length along the axial direction of the first sliding groove surface 141.

The first swing arm 20 is connected to the first support 10 in a rotation manner of a virtual shaft. The axis of the first sliding groove surface 141 and the second sliding groove surface 142 is a rotating axis of the first swing arm 20. The "virtual shaft" is different from a physical shaft, and does not need to be provided with an actual rotating shaft element. The first swing arm 20 rotates relative to the first support 10 by means of a rotation fit relationship between the first sliding groove surface 141 and the second sliding groove surface 142.

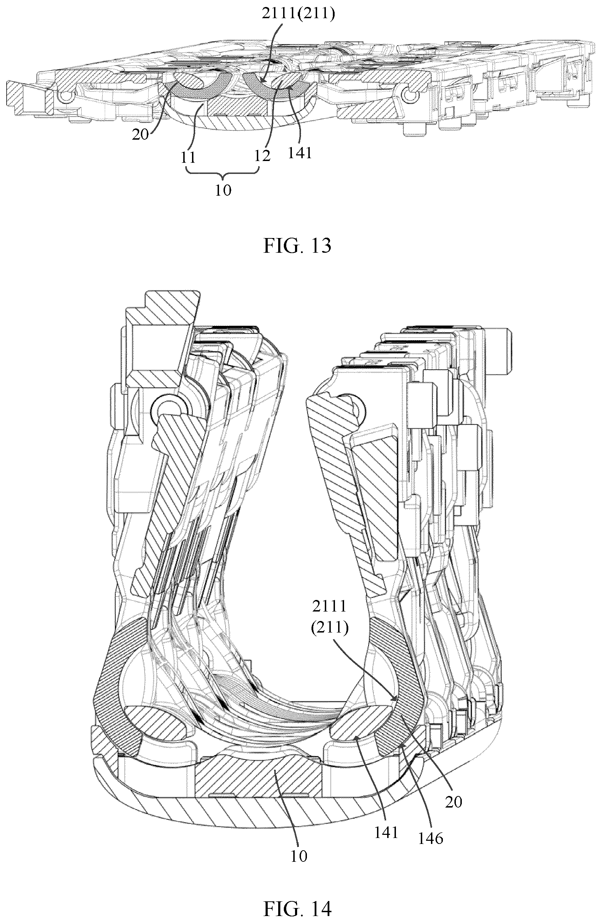

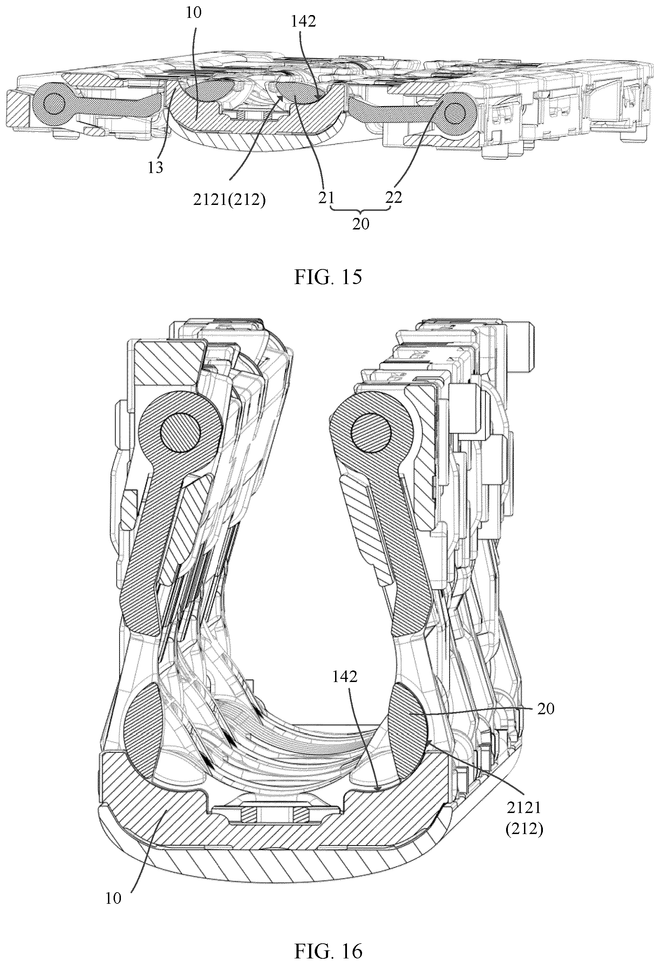

Referring to FIG. 11 to FIG. 16, two opposite sides of the first swing arm 20 are respectively in contact and rotation-fit with the first sliding groove surface 141 and the second sliding groove surface 142. Specifically, the two opposite sides of the first swing arm 20 are respectively a first surface 211 and a second surface 212. As shown in FIG. 13 and FIG. 14, the first swing arm 20 contacts and is in rotation-fit with the first sliding groove surface 141 through the first surface 211. As shown in FIG. 15 and FIG. 16, the first swing arm 20 contacts and is in rotation-fit with the second sliding groove surface 142 through the second surface 212.

During use, a part of the first swing arm 20 is located between the first sliding groove surface 141 and the second sliding groove surface 142, and the two sides of the first swing arm 20 respectively rotate relative to the first sliding groove surface 141 and the second sliding groove surface 142, so that the first swing arm 20 is folded or unfolded relative to the first support 10. In the unfolded state, as shown in FIG. 13 and FIG. 15, the first swing arm 20 is unfolded relative to a side of the first support 10. In the folded state, as shown in FIG. 14 and FIG. 16, the first swing arm 20 is folded above the first support 10. It may be understood that an unfolding angle and a folding angle of the first swing arm 20 may be set based on a requirement.

The folding mechanism 100 provided in embodiments of this application includes the first support 10 and the first swing arm 20. The first support 10 is provided with a first sliding groove surface 141 and a second sliding groove surface 142 that are coaxially arranged and spaced apart from each other. Two sides of the first swing arm 20 are respectively in contact and rotation-fit with the first sliding groove surface 141 and the second sliding groove surface 142. In this way, the first swing arm 20 can rotate relative to the first sliding groove surface 141 and the second sliding groove surface 142, so that the first swing arm 20 is folded or unfolded relative to the first support 10. The first swing arm 20 is connected to the first support 10 in a rotation manner of a virtual shaft. The foregoing folding mechanism 100 enables the first swing arm 20 to rotate on a fixed axis, which improves a movement accuracy of the first swing arm 20, and alleviates a problem of an insufficient amount of overlap of the swing arm. In addition, in the foregoing folding mechanism 100, the first sliding groove surface 141 and the second sliding groove surface 142 mated with the first swing arm 20 are both arranged on the first support 10, which enables easy processing, helps control a coaxiality between the sliding groove surfaces, and prevents tolerances of various components from cumulatively affecting a movement accuracy of the swing arm. The first sliding groove surface 141 and the second sliding groove surface 142 are both integrally arranged on the first support 10, which reduces a quantity of parts, and has few assembly procedures and is easy to assemble. Therefore, the foregoing folding mechanism 100 has a simple structure, and improves the movement accuracy of the first swing arm 20. The first support 10 is integrally arranged, which can reduce the quantity of parts and assembly processes, thereby effectively reducing the manufacturing and assembly costs.

In some embodiments, a radius of the first sliding groove surface 141 is not equal to a radius of the second sliding groove surface 142.

Because the first swing arm 20 has a specific thickness, the first sliding groove surface 141 and the second sliding groove surface 142 have different radii, which helps the two sides of the first swing arm 20 respectively contact the first sliding groove surface 141 and the second sliding groove surface 142. It may be understood that an arc space is jointly formed by the arc surface in which the first sliding groove surface 141 is located and the arc surface in which the second sliding groove surface 142 is located. The arc space is used for accommodating one end of the first swing arm 20 and for the first swing arm 20 to rotate in the arc space. The arc surface in which the first sliding groove surface 141 is located is an arc surface that is formed by extending the first sliding groove surface 141 along the axial direction thereof. The second sliding groove surface 142 is an arc surface that is formed by extending the second sliding groove surface 142 along the axial direction thereof. If the radius of the first sliding groove surface 141 is greater than the radius of the second sliding groove surface 142, the second sliding groove surface 142 is located between the arc surface in which the first sliding groove surface 141 is located and the axis.

It may be understood that, if the first surface 211 is an upper surface of the first swing arm 20 and the second surface 212 is a lower surface of the first swing arm 20, in other words, the first surface 211 is relatively away from a bottom surface of the first support 10 relative to the second surface 212, the radius of the first sliding groove surface 141 is less than the radius of the second sliding groove surface 142.

In another embodiment, the radius of the first sliding groove surface 141 and the radius of the second sliding groove surface 142 may also be set to be equal. Correspondingly, a shape of the first swing arm 20 needs to be set, to ensure that the first surface 211 and the second surface 212 respectively contact the first sliding groove surface 141 and the second sliding groove surface 142.

In addition, in this embodiment, the first surface 211 and the second surface 212 are arranged on two opposite sides of the first swing arm 20. In another embodiment, the first surface 211 and the second surface 212 may also be arranged at a specific included angle, as long as the first surface and the second surface may be respectively in rotation-fit with the first sliding groove surface and the second sliding groove surface.

Referring to FIG. 11 and FIG. 12, in some embodiments, the first swing arm 20 has a first end 21, two opposite sides of the first end 21 respectively include a first mating portion 2111 and a second mating portion 2121, and the first mating portion 2111 and the second mating portion 2121 are both arc surfaces. Referring to FIG. 11 to FIG. 16 together, the first mating portion 2111 is attached to and in slide-fit with the first sliding groove surface 141, and the second mating portion 2121 is attached to and in slide-fit with the second sliding groove surface 142.

Specifically, the first swing arm 20 has a first end 21 and a second end 22 that are arranged opposite to each other. The first end 21 is configured to be rotatably connected to the first support 10, and the second end 22 is configured to be connected to a connecting plate 80 of a fixed housing. The first end 21 is rotatably arranged between the first sliding groove surface 141 and the second sliding groove surface 142, so that the second end 22 is unfolded or folded relative to the first support 10. Because the first end 21 is rotatably connected to the support 10, the first swing arm 20 does not need to be set to be excessively large. It may be understood that, in another embodiment, a middle portion of the first swing arm 20 may be rotatably connected to the support 10. The middle portion is located between the first end 21 and the second end 22.

The first mating portion 2111 is a part of a surface of the first end 21, and an area of the first mating portion 2111 is less than an area of a surface on which the first mating portion is located. The second mating portion 2121 is a part of another surface of the first end 21, and an area of the second mating portion 2121 is also less than an area of a surface on which the second mating portion is located. It may be understood that the first mating portion 2111 and the second mating portion 2121 are spaced apart along a direction L3 of a center line of the first support 10.

A radian of the first mating portion 2111 matches a radian of the first sliding groove surface 141, so that the first mating portion 2111 is attached to and in slide-fit with the first sliding groove surface 141. In a folding process, the first mating portion 2111 gradually slides toward a direction of an outer side of the first support 10. The first sliding groove surface 141 can limit a movement track of the first swing arm 20 on a side of the first swing arm 20. In addition, the second mating portion 2121 is attached to and in slide-fit with the second sliding groove surface 142. In a folding process, the second mating portion 2121 gradually slides toward a direction of an outer side of the first support 10, and the second sliding groove surface 142 can limit the movement track of the first swing arm 20 on another side of the first swing arm 20, so that the first swing arm 20 rotates around a predetermined rotating axis between the first sliding groove surface 141 and the second sliding groove surface 142. The foregoing folding mechanism 100 enables the first swing arm 20 to smoothly move.

By using the foregoing technical solutions, the first mating portion 2111 is attached to and in slide-fit with the first sliding groove surface 141, and the second mating portion 2121 is attached to and in slide-fit with the second sliding groove surface 142. Therefore, the first swing arm 20 smoothly moves.

Optionally, because the first end 21 of the first swing arm 20 has a specific thickness, a radius of the first mating portion 2111 is not equal to a radius of the second mating portion 2121, and a radius of the first sliding groove surface 141 is also not equal to a radius of the second sliding groove surface 142. For example, if the first surface 211 is an upper surface of the first swing arm 20 and the second surface 212 is a lower surface of the first swing arm 20, in other words, the first surface 211 is relatively away from a bottom surface of the first support 10 relative to the second surface 212, the radius of the first mating portion 2111 is less than the radius of the second mating portion 2121.

In another embodiment, the second mating portion 2121 may also merely abut against the second sliding groove surface 142, and does not need to be in slide-fit with the second sliding groove surface 142. the movement accuracy of the first swing arm 20 can still be improved through the first sliding groove surface 141 and the second sliding groove surface 142.

Referring to FIG. 8 and FIG. 11, in some embodiments, the first end 21 is provided with at least two first mating portions 2111. The at least two first mating portions 2111 are arranged at an interval along the axial direction of the first sliding groove surface 141 and are respectively arranged on two sides of the second mating portion 2121. A plurality of first sliding groove surfaces 141 are provided, and each first mating portion 2111 is respectively sliding fitted with a corresponding first sliding groove surface 141.

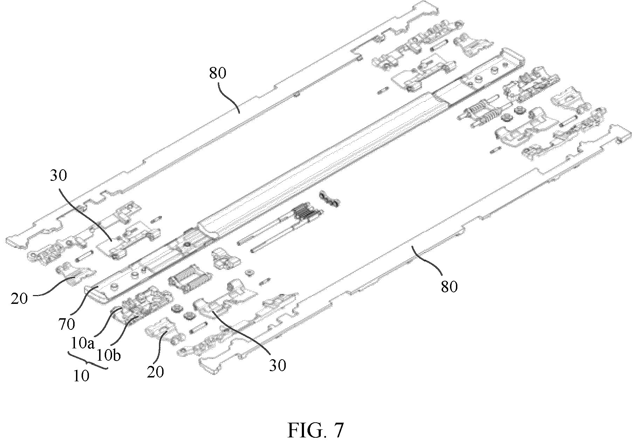

FIG. 11 and FIG. 12 are used as an example. The first end 21 is provided with two first mating portions 2111, and the two first mating portions 2111 have the same shape. Correspondingly, as shown in FIG. 7 to FIG. 9, two first sliding groove surfaces 141 are arranged on the first support 10 corresponding to the first swing arm 20. In addition, one or more second mating portions 2121 may be provided. The one or more second mating portions 2121 are arranged between two first mating portions 2111.

The first mating portions 2111 are respectively arranged at two opposite sides of the first end 21, and each first mating portion 2111 is attached to and in slide-fit with one first sliding groove surface 141, so that force bearing on two sides of the first swing arm 20 is balanced, and stability during movement is relatively good.

As shown in FIG. 9 and FIG. 14, optionally, an edge of the first support 10 is provided with a limiting surface 146. The first sliding groove surface 141 and the limiting surface 146 are opposite and spaced apart from each other to jointly define an accommodating space, and the first mating portion 2111 is rotatably received in the accommodating space.

The limiting surface 146 is arranged at the edge of the first support 10, and the limiting surface 146 and the first sliding groove surface 141 are respectively arranged at two opposite sides of the first swing arm 20. By providing the limiting surface 146, a limiting effect on the movement track of the first swing arm 20 can be further strengthened, and the movement accuracy of the first swing arm 20 can be maintained.

It may be understood that because the limiting surface 146 and the second sliding groove surface 142 are located on a same side of the first swing arm 20, and the second sliding groove surface 142 has a function to guide and limit sliding, the limiting surface 146 may also be omitted.

In some embodiments, the first support 10 is integrally formed.

The first support 10 may be a plastic material and is suitable for being manufactured in an integral forming manner, but this is not limited thereto. For example, the first support 10 may alternatively be metal or another material. The first sliding groove surface 141 and the second sliding groove surface 142 are directly manufactured on the first support 10 in an integral forming manner. Therefore, the first sliding groove surface 141 and the second sliding groove surface 142 have a simple manufacturing manner, and a tolerance brought by part assembly is reduced. The first support 10 is integrally arranged, so that a quantity of parts can be reduced, and assembly complexity and assembly costs can be reduced.

Referring to FIG. 9 and FIG. 10, in some embodiments, the first support 10 is provided with a molding process slot 15, and the molding process slot 15 is provided opposite to the first sliding groove surface 141 or the second sliding groove surface 142.

The molding process slot 15 may be a groove or a through hole, and is specifically set based on a shape of the first support 10 and a position of a sliding groove surface. The molding process slot 15 is configured to expose the first sliding groove surface 141 or the second sliding groove surface 142, to facilitate processing.

The molding process slot 15 is provided opposite to the first sliding groove surface 141 or the second sliding groove surface 142. To be specific, when a to-be-processed sliding groove surface is located at a top of the first support 10, the molding process slot 15 is located at a bottom of the first support 10. When the to-be-processed sliding groove surface is located at the bottom of the first support 10, the molding process slot 15 is located at the top of the first support 10. For example, in this embodiment, the molding process slot 15 is provided opposite to the first sliding groove surface 141, the first sliding groove surface 141 is arranged at the top of the first support 10, and the molding process slot 15 extends through the bottom of the first support 10.

The molding process slot 15 is arranged, which helps integrally form the first sliding groove surface 141 and the second sliding groove surface 142 on the first support 10, so that the sliding groove surfaces have a relatively high molding accuracy.

Still referring to FIG. 9 and FIG. 10, in some embodiments, the first support 10 includes a first support body 11 and a first boss 12 arranged on the first support body 11, and the first sliding groove surface 141 is arranged on a side of the first boss 12. The first support body 11 is provided with the molding process slot 15 arranged opposite to the first sliding groove surface 141.

Optionally, the first sliding groove surface 141 is arranged on a side of the first boss 12 facing the first support body 11, and the first sliding groove surface 141 is spaced apart from a surface of the first support body 11. A specific gap is defined between the first sliding groove surface 141 and a surface of the first support body 11, so that the first swing arm 20 is inserted between the first support body 11 and the first sliding groove surface 141. Specifically, the first boss 12 includes a protrusion 121 connected to the first support body 11 and an extension 122 extending from the protrusion 121 along the direction of the center line of the first support 10. The extension 122 is spaced apart from the first support body 11. To be specific, the extension 122 is suspended above the first support body 11, and the first sliding groove surface 141 is arranged on a side of the extension 122 facing the first support body 11. By arranging the first boss 12, the first sliding groove surface 141 is helped to set to have a specific height.

To manufacture the first sliding groove surface 141 in the integral forming manner, the molding process slot 15 needs to be provided on the first support body 11. If the first sliding groove surface 141 is arranged on a side of the first boss 12 facing the first support body 11, the molding process slot 15 is the through hole. It may be understood that in another embodiment, the first sliding groove surface 141 may also be arranged on a side of the first boss 12 facing away from the first support body 11. In this case, the molding process slot 15 does not need to be arranged for the first sliding groove surface 141.

The first sliding groove surface 141 can be conveniently integrally manufactured on the first support 10 by arranging the molding process slot 15 on the first support body 11.

In some embodiments, the first support 10 further includes a second boss 13 protruding from a side of the first support body 11, and the second sliding groove surface 142 is arranged on a side of the second boss 13.

As shown in FIG. 9 to FIG. 16, the first sliding groove surface 141 is configured to be attached to the upper surface of the first swing arm 20, and the second sliding groove surface 142 is configured to be attached to the lower surface of the first swing arm 20. Optionally, the second boss 13 is provided with two second sliding groove surfaces 142 arranged at an interval, to increase a contact area between the first support 10 and the first swing arm 20.

The second boss 13 and the first support body 11 are integrally formed. Optionally, the second sliding groove surface 142 is directly arranged on a surface of the second boss 13 facing away from the first support body 11. The second sliding groove surface 142 may be directly processed, and does not need to be provided with a corresponding molding process slot 15.

As shown in FIG. 8 and FIG. 9, the first sliding groove surface 141 and the second sliding groove surface 142 are both arc-shaped and have a same protruding direction. The first sliding groove surface 141 is a convex surface that protrudes from the first boss 12, and the second sliding groove surface 142 is a concave surface that is recessed on the second boss 13. It may be understood that a structure of the first boss 12 and the second boss 13 is not limited thereto. Any one of the first sliding groove surface 141 and the second sliding groove surface 142 may be the convex surface or the concave surface, as long as the first sliding groove surface 141 and the second sliding groove surface 142 can be respectively in slide-fit with the two sides of the first swing arm 20. As shown in FIG. 11 and FIG. 12, the first mating portion 2111 is the concave surface, the second mating portion 2121 is the convex surface, and the first mating portion 2111 and the second mating portion 2121 have a same protruding direction.

Optionally, as shown in FIG. 9 and FIG. 11, two sides of the first swing arm 20 respectively have two protruding portions extending along the direction of the center line of the first support 10, and the first mating portion 2111 is arranged on a surface of each of the protruding portions. The protruding portion is rotatably arranged between the first sliding groove surface 141 and the limiting surface 146.

Referring to FIG. 7 and FIG. 8, in some embodiments, the first support 10 includes a first side portion 10a and a second side portion 10b. The first side portion 10a and the second side portion 10b are respectively located on two sides of the center line of the first support 10. The first side portion 10a is provided with the first sliding groove surface 141 and the second sliding groove surface 142 that have a first axis L1, and the second side portion 10b is provided with the first sliding groove surface 141 and the second sliding groove surface 142 that have a second axis L2. A center line L3 of the first support 10 is parallel to the first axis L1 and the second axis L2. The folding mechanism 100 includes at least two first swing arms 20, and the at least two first swing arms 20 are respectively rotatably connected to the first side portion 10a and the second side portion 10b.

Two or more first swing arms 20 may be provided, which may be specifically arranged based on a requirement. As shown in FIG. 7 and FIG. 8, the first swing arms 20 on two sides of the first support 10 are symmetrically arranged relative to the center line L3 of the first support 10. Correspondingly, the first sliding groove surfaces 141 and the second sliding groove surfaces 142 on the two sides of the first support 10 are also symmetrically arranged. In another embodiment, the first swing arms 20 on the two sides of the first support 10 may also be asymmetrically arranged.

The first swing arms 20 are respectively arranged on the two sides of the first support 10. The first swing arms 20 on two sides of the folding mechanism 100 can be folded or unfolded relative to the first support 10, to drive elements connected to the first swing arms 20 to be folded or unfolded. When the folding mechanism 100 is applied to a foldable mobile terminal, the two first swing arms 20 are respectively configured to connect two housings through a connecting plate 80, so as to realize relative folding and unfolding of the two housings.

Referring to FIG. 3, FIG. 4, and FIG. 7, in some embodiments, the folding mechanism 100 further includes a second swing arm 30 rotatably connected to the first support 10. The first swing arm 20 and the second swing arm 30 are spaced apart from each other along the direction of the center line of the first support 10.

It may be understood that at least two second swing arms 30 may be provided. The at least two second swing arms 30 are respectively rotatably connected to the first side portion 10a and the second side portion 10b of the first support 10.

The first swing arm 20 and the second swing arm 30 are respectively rotatably connected to the first support 10, and the first swing arm 20 and the second swing arm 30 may be jointly connected to the connecting plate 80 to adapt to a length of the housing.

Optionally, the folding mechanism 100 further includes a damping structure 313. The damping structure 313 is mounted to the first support 10 and connected to the second swing arm 30. The damping structure 313 is configured to provide a damping force during rotation of the second swing arm 30.

Referring to FIG. 7 and FIG. 8, in some embodiments, the second swing arm 30 is rotatably connected to the first support 10 through a rotating shaft and a rotating shaft hole 143. The rotating shaft hole 143 is provided on the first support 10. Alternatively, the rotating shaft (not shown in the figure) is integrally arranged on the first support 10.

The second swing arm 30 is rotatably connected to the first support 10 through the rotating shaft and the rotating shaft hole 143. In other words, one of the second swing arm 30 and the first support 10 is provided with the rotating shaft, and the other is provided with a rotating shaft hole 143. The rotating shaft is inserted into the rotating shaft hole 143. The second swing arm 30 can move around the determined rotating axis. The rotating axis of the second swing arm 30 is an axis line of the rotating shaft hole 143. The rotating axis is parallel to the axis of the first sliding groove surface 141 and the center line of the first support 10. In addition, in this embodiment of this application, rotation connection structures of the first swing arm 20 and the second swing arm 30 are both integrated on the first support 10, which reduces the quantity of parts and reduces complexity of an assembly process and assembly costs.

In an embodiment, as shown in FIG. 7 and FIG. 8, the rotating shaft hole 143 is provided on the first support 10, and an inner surface of the rotating shaft hole 143 is an integrally formed cylindrical surface. In this case, the second swing arm 30 is provided with the rotating shaft.

An inner surface of the rotating shaft hole 143 is a complete cylindrical surface, a hole diameter and a hole center distance have a relatively high accuracy, and a gap between the rotating shaft and the rotating shaft hole 143 can be reduced, thereby improving synchronization performance of the second swing arm 30. The rotating shaft hole 143 does not need to be divided into two parts that are engaged with each other and are respectively manufactured on two elements. Therefore, the second swing arm 30 can rotate about the determined rotating axis, with has a relatively high movement accuracy.

Specifically, the first rotating shaft hole 143 may be provided on an end of the first support 10, and an end of the second swing arm 30 away from the first support 10 may be in rotation-fit with the rotating shaft hole 143 of another support. Alternatively, the first support 10 is provided with two spaced first rotating shaft holes 143, two ends of the second swing arm 30 are respectively in rotation-fit with the two rotating shaft holes 143, and a coaxiality among the plurality of rotating shaft holes 143 is relatively good.

In another embodiment, the rotating shaft is integrally arranged on the first support 10. In this case, the second swing arm 30 is provided with the rotating shaft hole 143, which can also implement a rotating connection between the second swing arm 30 and the first support 10 and improve a movement accuracy of the second swing arm 30.

By using the foregoing technical solution, the second swing arm 30 is rotatably connected to the first support 10 through the rotating shaft and the rotating shaft hole 143. The second swing arm 30 has a simple mounting manner, and the second swing arm 30 can move around the determined rotating axis, which has a relatively high movement accuracy.

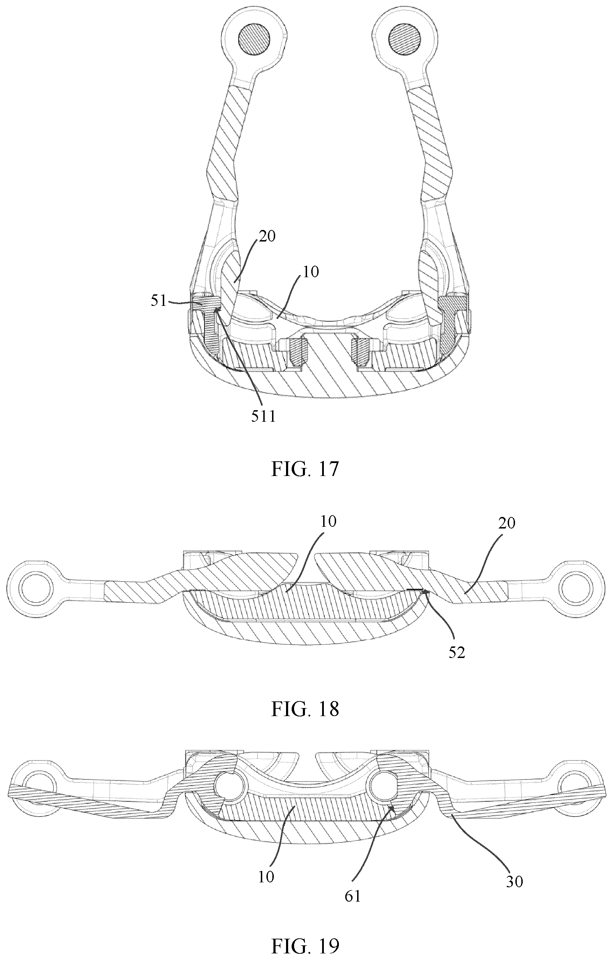

Referring to FIG. 17 to FIG. 18, in some embodiments, the first support 10 is provided with a first stop structure, and the first stop structure is configured to stop the first swing arm 20 in an unfolding or folding process of the first swing arm 20.

A rotation angle of the first swing arm 20 may be limited by arranging the first stop structure, so that the first swing arm 20 is folded and unfolded within a specific angle range. For example, the first stop structure may stop the first swing arm 20 in the unfolded state of the first swing arm 20, so that the first swing arm 20 can be tiled on a side of the first support 10. Alternatively, the first stop structure may stop the first swing arm 20 in a folded state of the first swing arm 20, so that the first swing arm 20 can be vertically arranged on the first support 10. It may be understood that a rotation angle range of the first swing arm 20 is not limited thereto, and may be set based on a requirement.

In some embodiments, referring to FIG. 8, FIG. 11, and FIG. 17, the first swing arm 20 is provided with a first mounting hole 23. The first stop structure includes a first stop block 51 arranged on the first support 10. The first stop block 51 extends through the first mounting hole 23. The first stop block 51 is configured to abut against the first swing arm 20 in the unfolded state or the folded state of the first swing arm 20.

The first mounting hole 23 may be arranged in the middle portion of the first swing arm 20, to facilitate rotation of the first swing arm 20 relative to the first stop block 51.

The first support 10 is provided with a stop block mounting hole. One end of the first stop block 51 is mounted in the stop block mounting hole, and the other end of the first stop block extends through the first mounting hole 23 of the first swing arm 20. When the first swing arm 20 is in the unfolded state, the first stop block 51 has no blocking effect. When the first swing arm 20 is folded to a certain extent, the first swing arm 20 is located at an edge of the first mounting hole 23 and abuts against the first stop block 51, so that the first stop block 51 stops the first swing arm 20 and prevent the first swing arm 20 from being further folded. Optionally, an end of the first stop block 51 is provided with a stop flange facing the middle portion of the first support 10, and the first swing arm 20 is located at the edge of the first mounting hole 23 and abuts against the stop flange.

In another embodiment, the first stop block 51 can abut against the first swing arm 20 during unfolding the first swing arm 20.

The first stop block 51 is arranged, and the first stop block 51 can stop the first swing arm 20 in the unfolded state or the folded state of the first swing arm 20, so as to limit the rotation angle of the first swing arm 20. Because the first stop block 51 extends through the first mounting hole 23, the first stop block 51 is prevented from blocking movement of the first swing arm 20 within a normal rotation angle range.

In some embodiments, the first stop block 51 protrudes from the first support 10. A side of the first stop block 51 facing the first support 10 has a first stop surface 511. The first stop surface 511 is configured to abut against the first swing arm 20 during folding the first swing arm 20.

The first swing arm 20 has the upper surface and the lower surface that are arranged opposite to each other. A surface of the first swing arm 20 away from the bottom of the first support 10 in the unfolded state is defined as the upper surface herein. The first stop surface 511 is configured to abut against the upper surface of the first swing arm 20 in the folded state of the first swing arm 20. In another embodiment, the first stop surface 511 may also be configured to abut against the lower surface of the first swing arm 20 in the folded state of the first swing arm 20.

Optionally, the first stop block 51 is mounted through the stop block mounting hole in the first support 10, to facilitate assembly. In another embodiment, the first stop block 51 may also be integrally formed with the first support 10.

The first stop block 51 protruding from the first support 10 is arranged. T first stop surface 511 of the first stop block 51 can abut against the first swing arm 20 in the folded state of the first swing arm 20, to prevent the first swing arm 20 from being excessively folded.

Referring to FIG. 8 and FIG. 18, in some embodiments, the first stop structure includes a second stop surface 52 arranged on an edge of the first support 10, and the second stop surface 52 is configured to abut against the first swing arm 20 in the unfolded state of the first swing arm 20.

As shown in FIG. 8, the second stop surface 52 is arranged between the first sliding groove surface 141 and the second sliding groove surface 142. The second stop surface 52 may be a flat surface, to help abut against the first swing arm 20. A setting angle of the second stop surface 52 may be adjusted to adapt to requirements of different unfolding angles. Optionally, a height of the second stop surface 52 is less than a height of the first sliding groove surface 141 and a height of the second sliding groove surface 142.

Through use of the foregoing technical solution, the first swing arm 20 is stopped from being excessively unfolded directly through the second stop surface 52 arranged on the first support 10, and the stop structure is relatively simple.

Referring to FIG. 8, FIG. 19, and FIG. 20, in some embodiments, the first support 10 is further provided with a second stop structure 60. The second stop structure 60 includes a third stop surface 61 and a fourth stop surface 62 arranged on the first support 10. The third stop surface 61 is configured to abut against the second swing arm 30 in the unfolded state of the second swing arm 30. The fourth stop surface 62 is configured to abut against the second swing arm 30 in the folded state of the second swing arm 30.

Specifically, the first support 10 is provided with a rotating shaft hole 143. The third stop surface 61 and the fourth stop surface 62 are both arranged on a side of the rotating shaft hole 143. The third stop surface 61 is located at an edge of the first support 10. The fourth stop surface 62 is located between the third stop surface 61 and the center line of the first support 10. Optionally, the third stop surface 61 may be arranged vertically or deflect relative to a vertical direction by an angle. When the second swing arm 30 is unfolded, the second swing arm 30 abuts against the third stop surface 61, so that the third stop surface 61 may limit excessive unfolding of the second swing arm 30. Optionally, the fourth stop surface 62 may be horizontally arranged or may deflect from a horizontal direction by an angle. When the second swing arm 30 is folded, the second swing arm 30 abuts against the fourth stop surface 62, so that the fourth stop surface 62 may limit excessive folding of the second swing arm 30.

Through use of the foregoing technical solution, the second swing arm 30 is directly stopped through the third stop surface 61 and the fourth stop surface 62 arranged on the first support 10, so that a rotation angle range of the second swing arm 30 can be limited, and the stop structure is relatively simple.

Referring to FIG. 7, in some embodiments, the folding mechanism 100 further includes a second support 70 fixedly connected to the first support 10. A connection manner of the first support 10 and the second support 70 includes one or more of bonding, welding, snap-fit connection, interference-fit connection, and fastener connection. The second support 70 is configured to support the first support 10, or the second support 70 is configured to connect to a connecting plate 80 together with the first support 10.

A shape and a material of the second support 70 are not limited in this application. The second support 70 may be a shaft cover, a support, or another structure.

In this embodiment, the second support 70 is the shaft cover. The second support 70 is arranged on a side of the first support 10 facing away from the first swing arm 20. The second support 70 is configured to support the first support 10, but is not limited thereto. In another embodiment, the second support 70 may also be fixedly connected to a side of the first support 10 along a length direction of the first support 10, so that the first support 10 and the second support 70 may jointly support the connecting plate 80 along the length direction of the connecting plate 80.

The rotation connection structures of the first swing arm 20 and the second swing arm 30 are both arranged on the first support 10. A rotation connection structure adapted to the first swing arm 20 or the second swing arm 30 does not need to be arranged on the second support 70. Therefore, difficulty of assembling the second support 70 to the first support 10 is reduced. The first support 10 may be fixedly connected to the second support 70 in one or more connection manners. For example, the first support 10 is connected to the second support 70 merely by means of the adhesion. For another example, the first support 10 is connected to the second support 70 by means of both the snapping connection and the fastened connection.

Through use of the foregoing technical solution, in the folding mechanism 100 provided in this application, the rotation connection structures of the first swing arm 20 and the second swing arm 30 are both arranged on the first support 10, and a coaxiality is controllable, so that difficulty of assembling the second support 70 and the first support 10 is reduced, thereby facilitating assembly, and reducing costs.

Referring to FIG. 7, FIG. 8, and FIG. 20 to FIG. 22, in some embodiments, one of the first support 10 and the second support 70 is provided with a positioning pin 71, and the other is provided with a positioning hole 72. The positioning hole 72 is a through hole or a blind hole. The positioning pin 71 is inserted into the positioning hole 72.

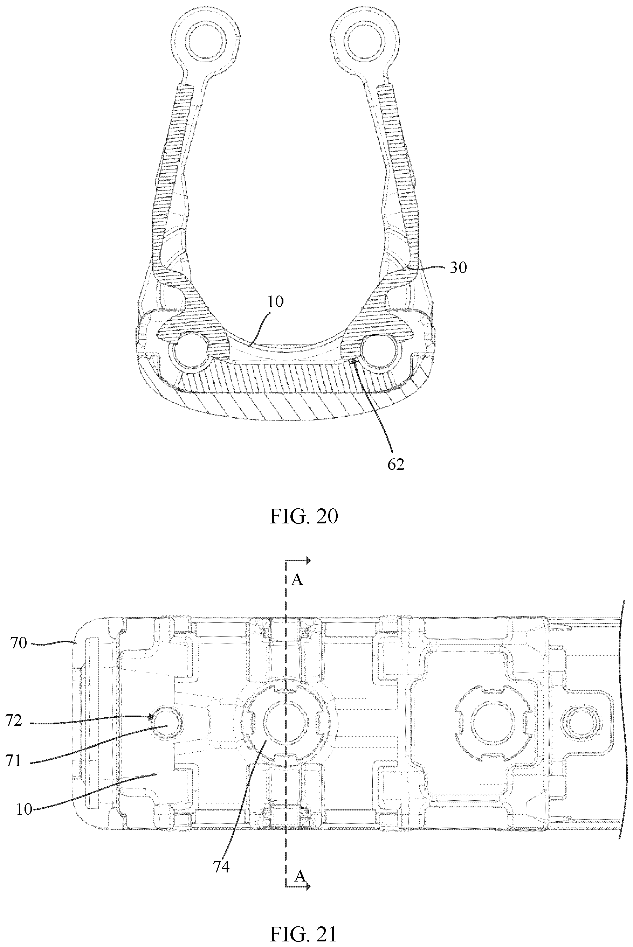

For example, as shown in FIG. 21, the first support 10 is provided with the positioning hole 72, and the positioning pin 71 protrudes from the second support 70. Certainly, the positioning pin 71 may also be arranged on the first support 10 and the positioning hole 72 may be provided on the second support 70.

In addition, one or more positioning holes 72 and positioning pins 71 may be provided. For example, two positioning pins 71 are respectively arranged on two opposite sides of the second support 70. During assembly, the positioning pin 71 on the second support 70 is inserted into a corresponding positioning hole 72, which helps improve a positioning accuracy between the first support 10 and the second support 70.

Through use of the foregoing technical solution, the first support 10 and the second support 70 are aligned through the positioning pin 71 and the positioning hole 72, which has a relatively high assembly alignment accuracy, has a relatively small quantity of parts of the folding mechanism 100, and reduces assembly difficulty and costs.

Referring to FIG. 7, FIG. 10, and FIG. 22, in some embodiments, the second support 70 is arranged on a side of the first support 10 facing away from the first swing arm 20. A side of the first support 10 facing the second support 70 is provided with a positioning surface 111 and an adhesive dispensing groove 112. The positioning surface 111 is configured to abut against the second support 70. The adhesive dispensing groove 112 is recessed relative to the positioning surface 111, and the adhesive dispensing groove 112 is configured to accommodate an adhesive.

The second support 70 is the shaft cover that supports the first support 10. It may be understood that the second support 70 may be provided with a plurality of first supports 10 in sequence. The second support 70 can alleviate a problem of an insufficient thickness of the first support 10. The positioning surface 111 is configured to abut against the second support 70, to align the first support 10 and the second support 70 in a height direction. The adhesive dispensing groove 112 is configured to accommodate the adhesive. A position and an area of the adhesive dispensing groove 112 may be set based on a requirement.

During assembly, the adhesive may be first applied to the adhesive dispensing groove 112, and then the first support 10 is mounted to the second support 70, so that the positioning pin 71 of the second support 70 extends through the positioning hole 72 of the first support 10, and the positioning surface 111 of the first support 10 abuts against a surface of the second support 70.

Through use of the foregoing technical solution, the first support 10 may be aligned with the second support 70 in the height direction through the positioning surface 111, and the first support 10 may be bonded to the second support 70 through the adhesive, to implement a fixed connection between the first support 10 and the second support 70. In this embodiment of this application, a rotation-fit structure of the first swing arm 20 is integrated on the first support 10, and the rotation-fit structure does not need to be arranged on the second support 70, which reduces a quantity of screws required for precise positioning and fitting of the first support 10 and the second support 70, and reduces the assembly difficulty and assembly costs.

In some embodiments, the second support 70 is provided with a stud 73, the first support 10 is provided with a through hole 16, and the stud 73 extends through the through hole 16 and is configured to allow mounting of a nut 74. One or more studs 73 and through holes 16 may be provided. Optionally, two studs 73 and two through holes 16 are provided.

It may be understood that when the first support 10 is fixedly connected to the second support 70 through the stud 73 and the nut 74, another connection manner may be used at the same time. For example, in addition to the nut 74, the first support 10 and the second support 70 may further be bonded through the adhesive.

Through use of the foregoing technical solution, in the folding mechanism 100, the first support 10 and the second support 70 are fixedly connected by using the nut 74 as a fastener, so as to achieve relatively high connection strength. The first support 10 and the second support 70 do not need to be assembled through excessive parts, so as to achieve relatively low assembly difficulty and relatively low costs.

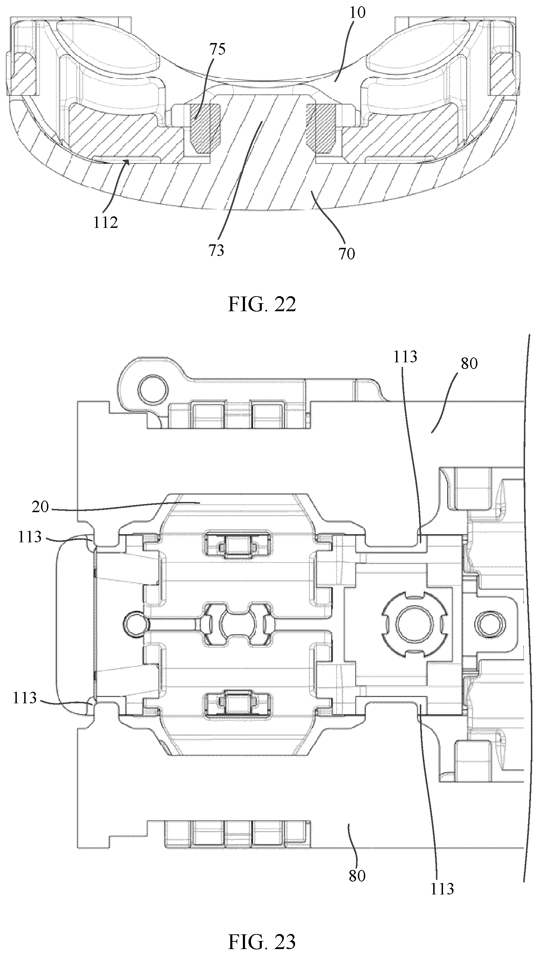

Referring to FIG. 9 and FIG. 23, in some embodiments, a surface of the first support 10 is provided with a support platform 113, and the support platform 113 is configured to support a connecting plate 80 connected to the first swing arm 20 in an unfolded state of the first swing arm 20.

Specifically, referring to FIG. 7 and FIG. 11 together, the first end 21 of the first swing arm 20 is rotatably connected to the first support 10. The second end 22 of the first swing arm 20 is connected to the connecting plate 80. A connection manner of the second end 22 and the connecting plate 80 may be rotating connection, sliding connection, fixed connection, or the like. The connecting plate 80 is configured to connect to a housing of the foldable mobile terminal.

Optionally, the first side portion 10a and the second side portion 10b of the first support 10 are both provided with a plurality of support platforms 113, and the plurality of support platforms 113 are respectively arranged on two opposite sides of the first swing arm 20, to smoothly support the connecting plate 80.

Through use of the foregoing technical solution, the first support 10 provided in this embodiment of this application can support the connecting plate 80 in the unfolded state through the support platform 113, to reduce a pressing virtual position of the screen in an axial area in the unfolded state.

In some embodiments, the second support 70 is the shaft cover. A surface of the first support 10 facing away from the second support 70 is provided with a screen water drop avoidance groove 17, and the screen water drop avoidance groove 17 is configured to match a screen 200 in a folded state.

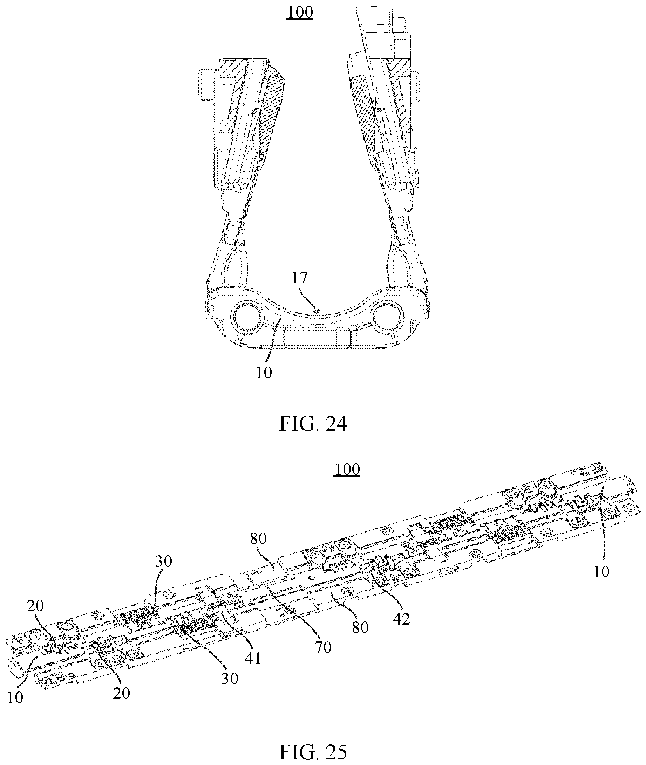

Referring to FIG. 2 and FIG. 24, the folding mechanism 100 provided in this embodiment of this application is an inward folding scheme. When the folding mechanism 100 is applied to the foldable mobile terminal, the screen 200 in the folded state is located between the two first swing arms 20. Because an outer contour surface of a folded screen 200 may be in a shape of a water drop, the screen water drop avoidance groove 17 arranged in the first support 10 can match a shape of the folded screen 200, to avoid an inwardly folded screen 200.

Specifically, the screen water drop avoidance groove 17 is a groove-shaped structure integrally formed on the surface of the first support 10. Two ends of the first support 10 are each provided with a groove, and the groove is a part of the screen water drop avoidance groove 17. A surface of a middle portion of the first support 10 is also substantially in a shape of a water drop-shaped groove. It may be understood that if the middle portion of the first support 10 can avoid the screen, only the groves on the two ends of the first support 10 may be arranged as the screen water drop avoidance grooves 17.

Through use of the foregoing technical solution, the first support 10 is designed with the screen water drop avoidance groove 17, which increases an avoidance gap between the first support 10 and the water drop-shaped outer contour surface of the screen in the folded state.

Referring to FIG. 8 and FIG. 10, at least one side of the first support 10 is provided with a weight-reducing groove 18. The weight-reducing groove 18 is configured to reduce a weight of the first support 10, to meet a requirement for a light weight of the foldable mobile terminal. The weight-reducing groove 18 may be provided on one or two sides of the first support 10. Optionally, a surface of the first support 10 close to the second support 70 and a surface of the first support facing away from the second support 70 are both provided with the weight-reducing groove 18.

Referring to FIG. 25 to FIG. 27, Embodiment II of this application further provides a folding mechanism 100. Similar to Embodiment I, the folding mechanism 100 includes a first support 10 and a first swing arm 20. The first swing arm 20 is rotatably connected to a side of the first support 10. The folding mechanism 100 provided in this embodiment is an outwardly folded scheme. When the folding mechanism 100 is applied to the foldable mobile terminal, the screen is folded on an outer side of the folding mechanism 100. It may be understood that the folding mechanism 100 provided in this embodiment may also be the inward folding scheme. When the folding mechanism 100 is applied to the foldable mobile terminal, the screen is folded on an inner side of the folding mechanism 100.

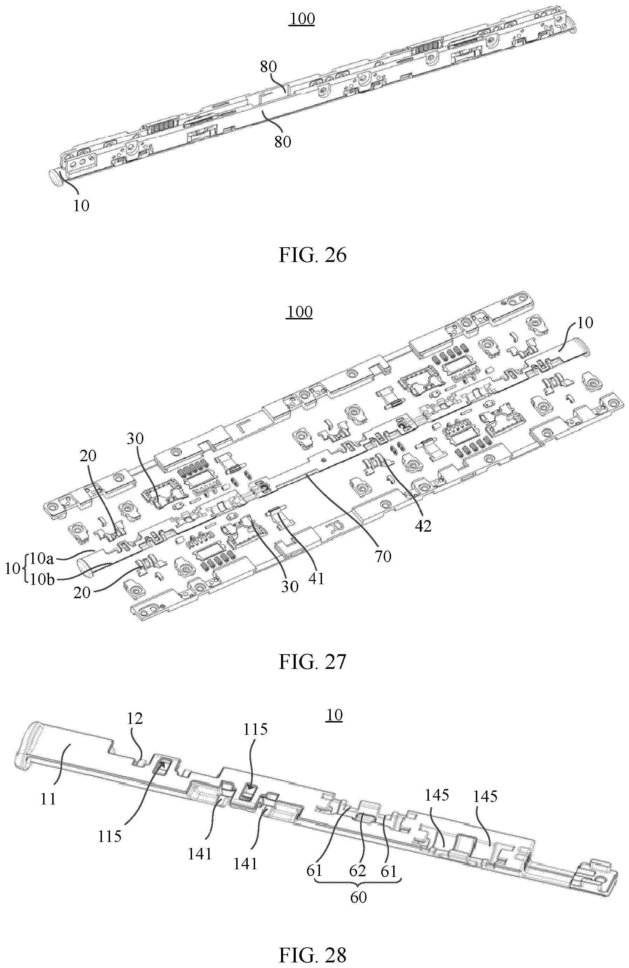

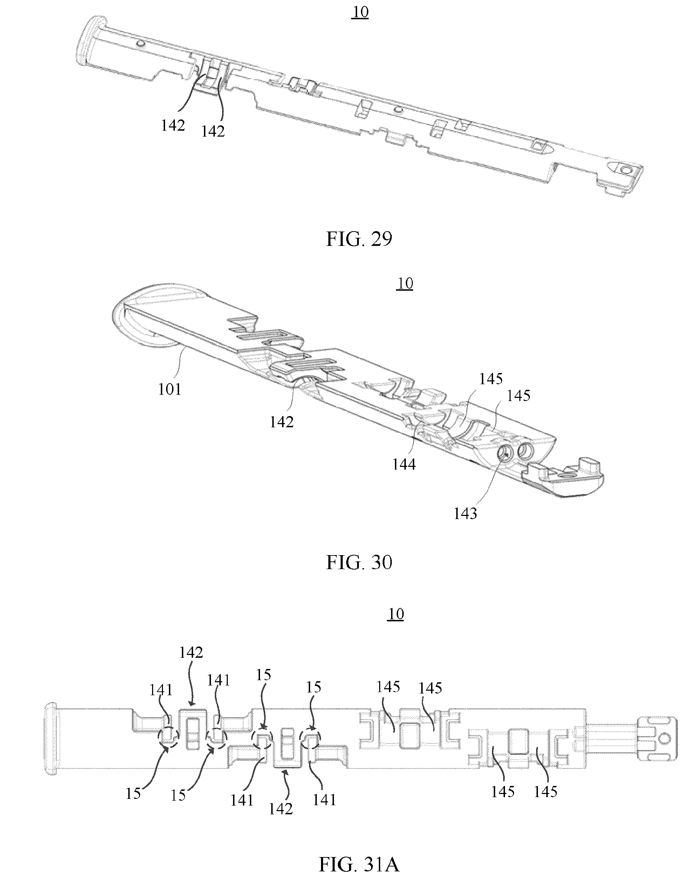

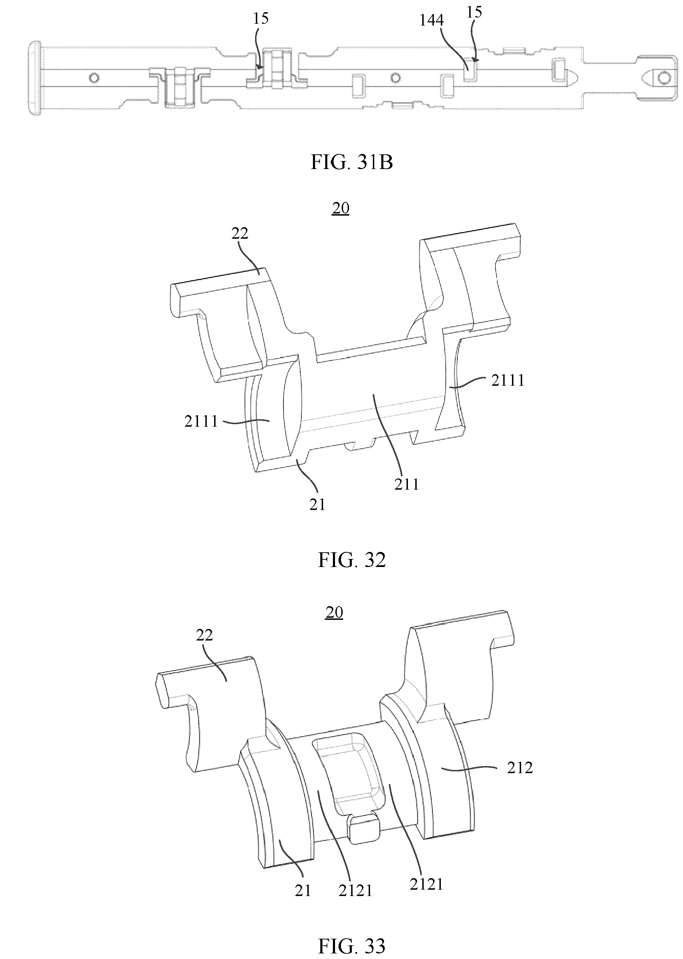

Referring to FIG. 28 to FIG. 31B, a side of the first support 10 is provided with a first sliding groove surface 141 and a second sliding groove surface 142. The first sliding groove surface 141 and the second sliding groove surface 142 are both arc surfaces and coaxially arranged, and the first sliding groove surface 141 and the second sliding groove surface 142 are spaced apart from each other along the direction of the center line of the first support 10. Referring to FIG. 27, FIG. 32, and FIG. 33, the first swing arm 20 has a first end 21. Two opposite sides of the first end 21 are respectively in contact and rotation-fit with the first sliding groove surface 141 and the second sliding groove surface 142. In this way, the first swing arm 20 can rotate around the determined rotating axis, and the folding mechanism 100 has a simple structure, thereby improving a movement accuracy of the first swing arm 20.

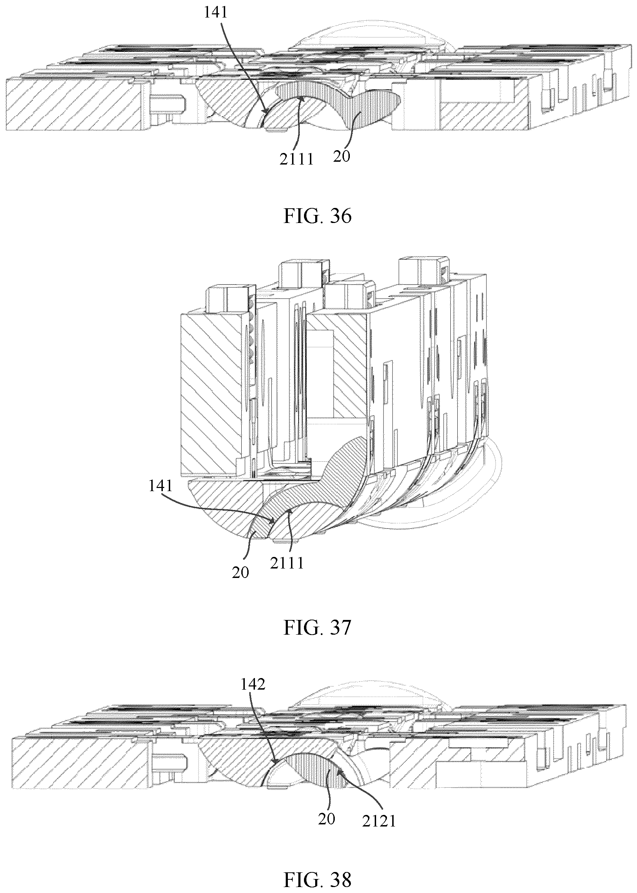

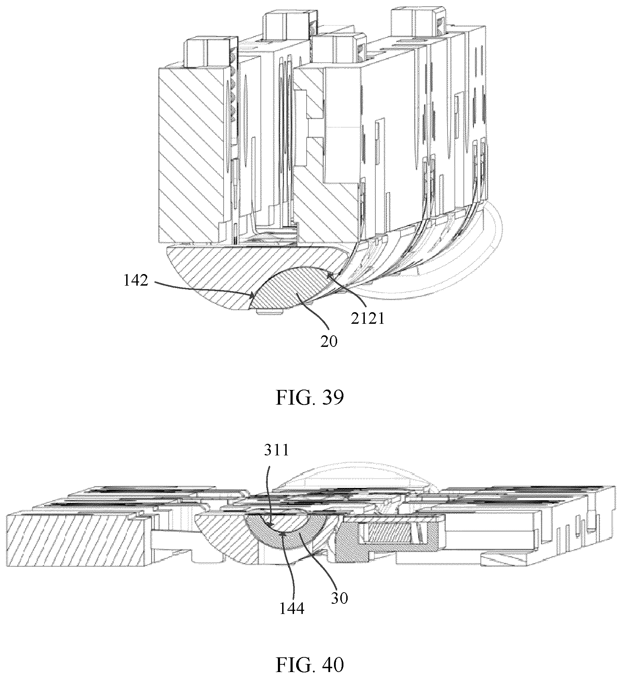

As shown in FIG. 31A and FIG. 32, the first surface 211 of the first end 21 includes a first mating portion 2111, the second surface 212 includes a second mating portion 2121, and the first mating portion 2111 and the second mating portion 2121 are both arc surfaces. Referring to FIG. 36 and FIG. 37, the first mating portion 2111 is attached to and in slide-fit with the first sliding groove surface 141. Referring to FIG. 38 and FIG. 39, the second mating portion 2121 is attached to and in slide-fit with the second sliding groove surface 142.

As shown in FIG. 27, FIG. 32, and FIG. 33, the first end 21 is provided with at least two first mating portions 2111. The at least two first mating portions 2111 are arranged at an interval along the direction of the center line of the first support 10 and are respectively arranged on two sides of the second mating portion 2121, and each first mating portion 2111 is respectively sliding fitted with a corresponding first sliding groove surface 141.

At least one of the first sliding groove surface 141 and the second sliding groove surface 142 is integrally arranged on the support. The first support 10 is provided with a molding process slot 15, and the molding process slot 15 is provided opposite to the first sliding groove surface 141 or the second sliding groove surface 142.

Optionally, as shown in FIG. 28 and FIG. 31A, the first support 10 includes a first support body 11 and a first boss 12 arranged on the first support body 11. The first sliding groove surface 141 is arranged on a surface of the first boss 12, and the molding process slot 15 is provided opposite to the first sliding groove surface 141. In this embodiment, the molding process slot 15 is provided opposite to an end of the first sliding groove surface 141 close to the middle portion of the first support body 11.

Optionally, the first support 10 is provided with a groove, and the first sliding groove surface 141 is arranged in the groove.

Still referring to FIG. 27, the first support 10 includes a first side portion 10a and a second side portion 10b. The first side portion 10a and the second side portion 10b are respectively located on two sides of the center line of the first support 10. The folding mechanism 100 includes at least two first swing arms 20, and the at least two first swing arms 20 are respectively rotatably connected to the first side portion 10a and the second side portion 10b. In this embodiment, the two first swing arms 20 are arranged in a staggered manner relative to the direction of the center line of the first support 10. It may be understood that the two first swing arms 20 may also be symmetrically arranged relative to the direction of the center line of the first support 10.

In an embodiment, the folding mechanism 100 further includes a second swing arm 30 rotatably connected to the first support 10. The first swing arm 20 and the second swing arm 30 are spaced apart from each other along the direction of the center line of the first support 10.

Referring to FIG. 27, FIG. 28, and FIG. 30, the first support 10 is further provided with a third sliding groove surface 144 and a fourth sliding groove surface 145, and the third sliding groove surface 144 and the fourth sliding groove surface 145 are coaxially arranged and are both arc surfaces. Two opposite sides of the second swing arm 30 are respectively rotatably connected to the third sliding groove surface 144 and the fourth sliding groove surface 145.

The second swing arm 30 is connected to the first support 10 in the rotation manner of the virtual shaft. An axis of the first sliding groove surface 141 and an axis of second sliding groove surface 142 is the rotating axis of the second swing arm 30. The foregoing folding mechanism 100 can rotate the second swing arm 30 on a fixed axis, thereby improving a movement accuracy of the second swing arm 30. In addition, in the foregoing folding mechanism 100, the third sliding groove surface 144 and the fourth sliding groove surface 145 are both arranged on the first support 10, which enables easy processing, helps control a coaxiality between the sliding groove surfaces, and prevents tolerances of various components from cumulatively affecting a movement accuracy of the swing arm.

Referring to FIG. 30 to FIG. 31B, for ease of processing, the first support 10 is further provided with a molding process slot 15 corresponding to the first sliding groove surface 141 or the second sliding groove surface 142, and a molding process slot 15 corresponding to the third sliding groove surface 144 or the fourth sliding groove surface 145. For example, in this embodiment, the molding process slot 15 is provided opposite to the third sliding groove surface 144.

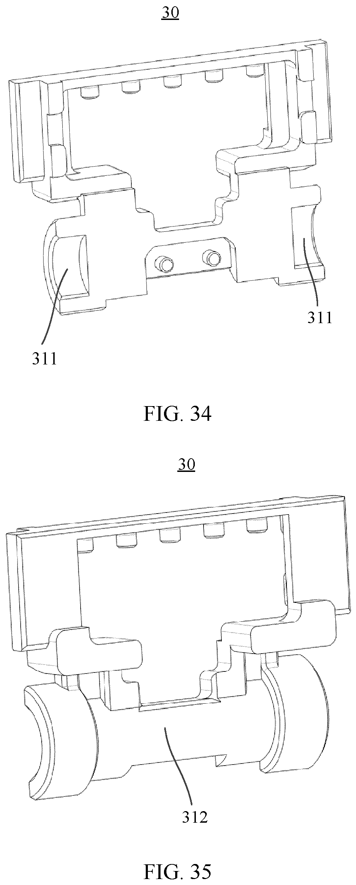

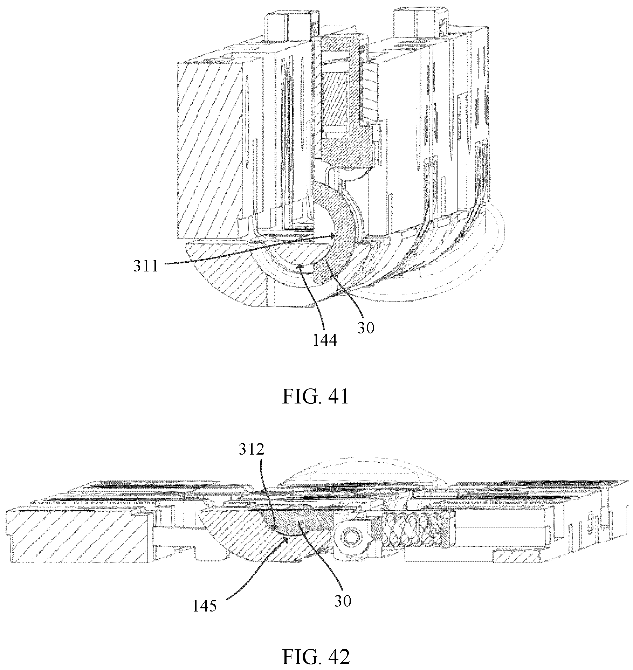

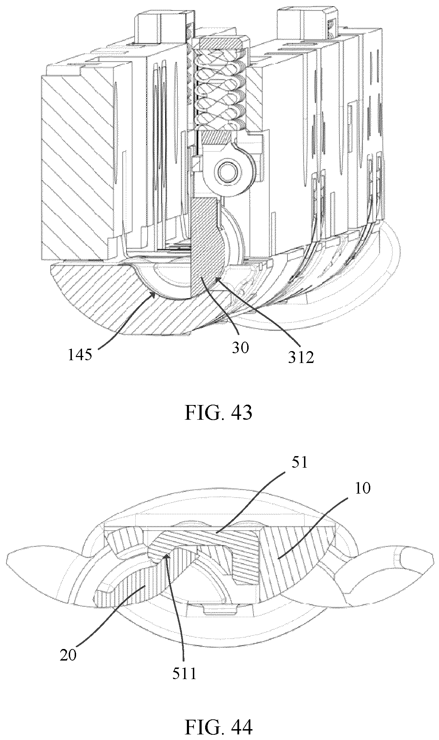

The third sliding groove surface 144 and the fourth sliding groove surface 145 are spaced apart from each other along the axial direction of the third sliding groove surface 144. Referring to FIG. 34 and FIG. 35, two opposite sides of the second swing arm 30 are respectively provided with a third mating portion 311 and a fourth mating portion 312. Referring to FIG. 40 and FIG. 41, the third mating portion 311 is attached to and in slide-fit with the third sliding groove surface 144. Referring to FIG. 42 and FIG. 43, the fourth mating portion 312 is attached to and in slide-fit with the fourth sliding groove surface 145. In this way, the third swing arm 41 smoothly move.

The first support 10 is provided with a first stop structure, and the first stop structure is configured to stop the first swing arm 20 in an unfolded state or a folded state of the first swing arm 20.

Referring to FIG. 28 and FIG. 44, the first stop structure includes a first stop block 51 arranged on the first support 10. The first stop block 51 has a first stop surface 511. The first stop surface 511 is configured to abut against the first swing arm 20 in the unfolded state of the first swing arm 20.

The first support 10 has an inner surface and an outer surface arranged opposite to each other, the first swing arm 20 is folded toward a direction away from the outer surface, and the first support 10 is provided with a second mounting hole 115. The first stop block 51 is received in the second mounting hole 115, the first stop block 51 has a first stop surface 511 facing away from the inner surface, and the first stop surface 511 is configured to abut against the first swing arm 20 in the unfolded state of the first swing arm 20.

The first stop surface 511 may be an inclined surface obliquely arranged relative to the inner surface of the first support 10, and a setting angle of the first stop surface 511 may be set based on a to-be-set unfolding angle. It may be understood that when the first swing arm 20 is folded, the first swing arm 20 gradually moves away from the first stop surface 511, so that the first stop surface 511 does not stop a folding action of the first swing arm 20. The second mounting hole 115 is provided on the first support 10, so that the first stop block 51 is helped mount to the first support 10. In addition, the first stop block 51 is configured to abut against the first swing arm 20 in the unfolded state of the first swing arm 20, so as not to interfere with the folding action of the first swing arm 20.

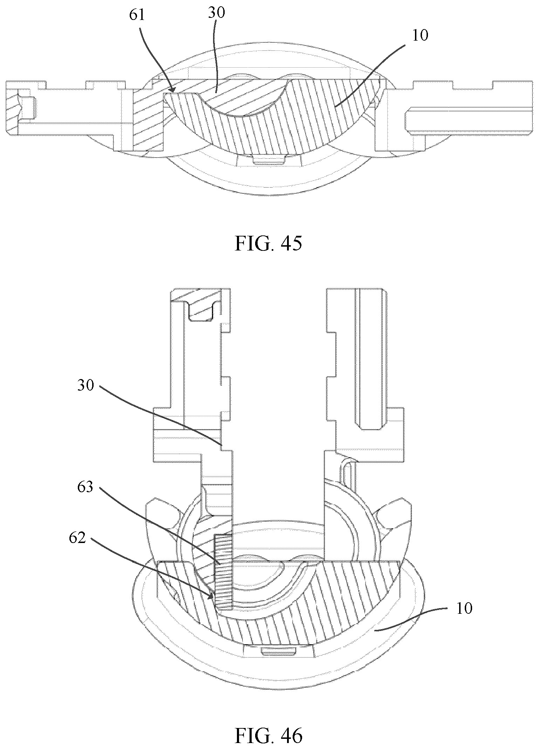

Referring to FIG. 28, in some embodiments, the first support 10 is provided with a second stop structure 60. The second stop structure 60 includes a third stop surface 61 and a fourth stop surface 62 arranged on the first support 10. Referring to FIG. 28 and FIG. 45 together, the third stop surface 61 is configured to abut against the second swing arm 30 in the unfolded state of the second swing arm 30. Referring to FIG. 28 and FIG. 46 together, the fourth stop surface 62 is configured to abut against the second swing arm 30 in the folded state of the second swing arm 30. The third stop surface 61 may be arranged on an edge of the first support 10, and the fourth stop surface 62 is arranged between the third stop surface 61 and the center line of the first support 10.

Optionally, a second swing arm 63 is provided with the second stop block 30, and the second stop block 63 is configured to abut against the fourth stop surface 62 in the folded state of the second swing arm 30. In this embodiment, the second stop block 63 is fixedly connected to the second swing arm 30, and the first support 10 is provided with a groove for the second stop block 63 to rotate. Referring to FIG. 25 and FIG. 27, in some embodiments, the folding mechanism 100 further includes a third swing arm 41 rotatably connected to the first support 10. The first swing arm 20, the second swing arm 30, and the third swing arm 41 are spaced apart from each other along the direction of the center line of the first support 10.

The third swing arm 41 may be rotatably connected to the first support 10 through the rotating shaft or the virtual shaft. For example, in this embodiment, the third swing arm 41 is rotatably connected to the first support 10 through the rotating shaft. Specifically, referring to FIG. 25, FIG. 27, and FIG. 30 together, the first support 10 is provided with a rotating shaft hole 143, and the third swing arm 41 is rotatably connected to the first support 10 through the rotating shaft inserted into the rotating shaft hole 143. It may be understood that, if the third swing arm 41 is rotatably connected to the first support 10 through the virtual shaft, the first support 10 is provided with a sliding groove surface adapted to the third swing arm 41. For a specific structure, reference is made to the first swing arm 20. Details are not described herein again.

Still referring to FIG. 25, in some embodiments, the folding mechanism 100 further includes a second support 70 fixedly connected to the first support 10. A connection manner of the first support 10 and the second support 70 includes one or more of bonding, welding, snap-fit connection, interference-fit connection, and fastener connection.

Optionally, the folding mechanism 100 includes a plurality of first supports 10 and the second support 70 connected between adjacent first supports 10. Two or more first supports 10 are provided. The length of the first support 10 does not need to be excessively long, thereby facilitating manufacturing.

Optionally, the second support 70 is fixedly connected to a side of the first support 10 along the length direction of the first support 10, and the fourth swing arm 42 is rotatably connected to the second support 70. A structure of the fourth swing arm 42 may be the same as any one of the first swing arm 20, the second swing arm 30, and the third swing arm 41, or may be a swing arm of another structure. This is not limited in this application.

The fourth swing arm 42 is provided, and the fourth swing arm 42 and a swing arm on the first support 10 may jointly drive the housing to rotate.

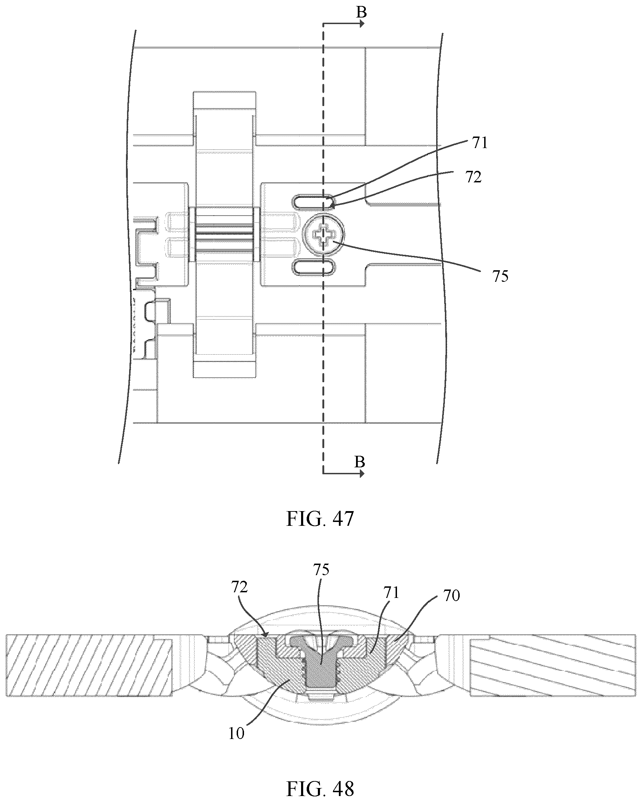

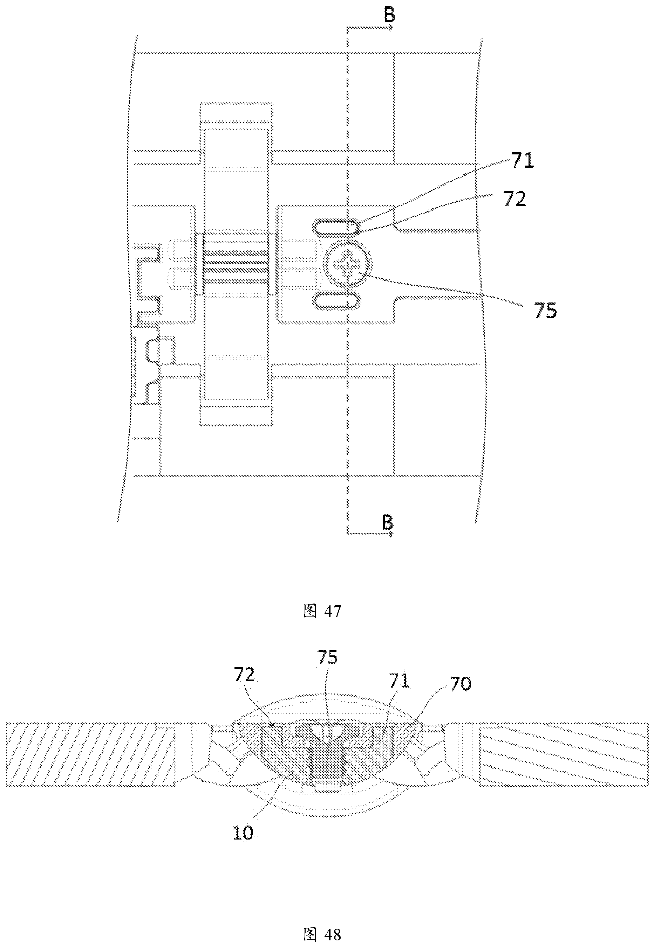

Referring to FIG. 47 and FIG. 48, in some embodiments, one of the first support 10 and the second support 70 is provided with a positioning pin 71, and the other is provided with a positioning hole 72. The positioning hole 72 is a through hole or a blind hole. The positioning pin 71 is inserted into the positioning hole 72.

Optionally, the positioning pin 71 is welded in the positioning hole 72, and the positioning hole 72 is further configured to accommodate welding slag. In this way, stability of connection between the first support 10 and the second support 70 can be improved.

In some embodiments, the second support 70 is further fixedly connected to the first support 10 through a fastening screw 75.

The folding mechanism 100 provided in this embodiment is an outwardly folded scheme. When the folding mechanism 100 is applied to the foldable mobile terminal, the screen is folded on an outer side of the folding mechanism 100. Referring to FIG. 30, and FIG. 37 to FIG. 46, in some embodiments, an outer surface 101 of the first support 10 is an arc surface, and the arc surface is configured to match the screen in the folded state. The outer surface 101 of the first support 10 is a surface of the first support 10 facing away from a side of the first swing arm 20 in the folded state.

It may be understood that when the folding mechanism 100 further includes the second support 70, an outer surface of the second support 70 is also an arc surface, and the arc surface is configured to match the screen in the folded state.

Still referring to FIG. 1 and FIG. 2, an embodiment of a second aspect of this application provides a foldable mobile terminal 1000, including a first housing 300, a second housing 400, and a screen 200. The screen 200 covers the first housing 300 and the second housing 400. The foldable mobile terminal 1000 further includes a folding mechanism 100 provided in any embodiment of the first aspect. The first housing 300 and the second housing 400 are opened or closed through the folding mechanism 100.

The foregoing descriptions are merely specific implementations of this application, but are not intended to limit the protection scope of this application.

## Claims

1. A folding mechanism, comprising:
a first support (10), wherein the first support is integrally formed, the first support is integrally provided with a first sliding groove surface (141) and a second sliding groove surface (142),
the first sliding groove surface and the second sliding groove surface are both arc surfaces and coaxially arranged, the first sliding groove surface and the second sliding groove surface are spaced apart from each other along an axial direction of the first sliding groove surface, the first support (10) is further provided with a molding process slot (15),
the molding process slot is a groove or a through hole, and the molding process slot is provided opposite to the first sliding groove surface or the second sliding groove surface, to expose the first sliding groove surface or the second sliding groove surface;
a first swing arm (20), wherein two sides of the first swing arm are respectively in contact and rotation-fit with the first sliding groove surface and the second sliding groove surface; and
a second swing arm (30), rotatably connected to the first support, wherein the first swing arm and the second swing arm are spaced apart from each other along a direction of a center line of the first support, and rotation connection structures of the first swing arm and the second swing arm are both integrated on the first support, wherein
the second swing arm is rotatably connected to the first support through a rotating shaft and a rotating shaft hole (143), the rotating shaft is inserted into the rotating shaft hole, the second swing arm is provided with the rotating shaft, the rotating shaft hole is provided on the first support, an inner surface of the rotating shaft hole is an integrally formed cylindrical surface, or the rotating shaft is integrally arranged on the first support, and the second swing arm is provided with the rotating shaft hole; or
the first support is further provided with a third sliding groove surface (144) and a fourth sliding groove surface (145), the third sliding groove surface and the fourth sliding groove surface are coaxially arranged and are both arc surfaces, and two opposite sides of the second swing arm are respectively in contact and rotation-fit with the third sliding groove surface and the fourth sliding groove surface.

2. The folding mechanism according to claim 1, wherein a radius of the first sliding groove surface is not equal to a radius of the second sliding groove surface.

3. The folding mechanism according to claim 1, wherein the first swing arm has a first end, two opposite sides of the first end each comprise a first mating portion and a second mating portion, the first mating portion and the second mating portion are both arc surfaces, the first mating portion is attached to and in slide-fit with the first sliding groove surface, and the second mating portion is attached to and in slide-fit with the second sliding groove surface.

4. The folding mechanism according to claim 3, wherein the first end is provided with at least two first mating portions, the at least two first mating portions are arranged at an interval along the axial direction of the first sliding groove surface and respectively arranged on two sides of the second mating portion, a plurality of first sliding groove surfaces are provided, and each of the first mating portions is in slide-fit with a corresponding one of the first sliding groove surfaces.

5. The folding mechanism according to claim 4, wherein the first support is further provided with a limiting surface, the first sliding groove surface and the limiting surface are opposite and spaced apart from each other to j ointly define an accommodating space, and the first mating portion is rotatably received in the accommodating space.

6. The folding mechanism according to claim 1, wherein the first support comprises a first support body and a first boss arranged on the first support body, and the first sliding groove surface is arranged on a side of the first boss; and
the first support body is provided with the molding process slot provided opposite to the first sliding groove surface.

7. The folding mechanism according to claim 6, wherein the first support further comprises a second boss arranged on a side of the first support body, and the second sliding groove surface is arranged on a side of the second boss.

8. The folding mechanism according to any one of claims 1 to 7, wherein the first support comprises a first side portion and a second side portion, the first side portion and the second side portion are respectively located on two sides of a center line of the first support, the first side portion is provided with the first sliding groove surface and the second sliding groove surface that have a first axis, the second side portion is provided with the first sliding groove surface and the second sliding groove surface that have a second axis, and the center line of the first support is parallel to the first axis and the second axis; and
the folding mechanism comprises at least two first swing arms, and the at least two first swing arms are respectively rotatably connected to the first side portion and the second side portion.

9. The folding mechanism according to any one of claims 1 to 7, wherein the first support is provided with a first stop structure, and the first stop structure is configured to stop the first swing arm in an unfolded state or a folded state of the first swing arm.

10. The folding mechanism according to claim 9, wherein the first swing arm is provided with a first mounting hole, the first stop structure comprises a first stop block arranged on the first support, the first stop block extends through the first mounting hole, and the first stop block is configured to abut against the first swing arm in the unfolded state or the folded state of the first swing arm.

11. The folding mechanism according to claim 9, wherein the first support has an inner surface and an outer surface arranged opposite to each other, the first swing arm is folded in a direction away from the outer surface, and the first support is provided with a second mounting hole; and
the first stop structure comprises a first stop block arranged on the first support, the first stop block is received in the second mounting hole, the first stop block has a first stop surface facing away from the inner surface, and the first stop surface is configured to abut against the first swing arm in the unfolded state of the first swing arm.

12. The folding mechanism according to claim 9, wherein the first stop structure comprises a second stop surface arranged on an edge of the first support, and the second stop surface is configured to abut against the first swing arm in the unfolded state of the first swing arm.

13. The folding mechanism according to claim 1, wherein the third sliding groove surface and the fourth sliding groove surface are spaced apart from each other along an axial direction of the third sliding groove surface; and
the two opposite sides of the second swing arm are respectively provided with a third mating portion and a fourth mating portion, the third mating portion is attached to and in slide-fit with the third sliding groove surface, and the fourth mating portion is attached to and in slide-fit with the fourth sliding groove surface.

14. The folding mechanism according to any one of claims 1 to 7, wherein the first support is provided with a third stop surface and a fourth stop surface, the third stop surface is configured to abut against the second swing arm in an unfolded state of the second swing arm, and the fourth stop surface is configured to abut against the second swing arm in a folded state of the second swing arm.

15. The folding mechanism according to claim 14, wherein the second swing arm is provided with a second stop block, and the second stop block is configured to abut against the fourth stop surface in the folded state of the second swing arm.

## Patentansprüche

1. Faltmechanismus, umfassend:
einen ersten Träger (10), wobei der erste Träger einstückig ausgebildet ist, der erste Träger einstückig mit einer ersten Gleitnutfläche (141) und einer zweiten Gleitnutfläche (142) versehen ist, wobei die erste Gleitnutfläche und die zweite Gleitnutfläche beide bogenförmige Flächen sind und koaxial angeordnet sind, wobei die erste Gleitnutfläche und die zweite Gleitnutfläche entlang einer axialen Richtung der ersten Gleitnutfläche voneinander beabstandet sind, wobei der erste Träger (10) ferner mit einem Formgebungsschlitz (15) versehen ist, wobei der Formgebungsschlitz eine Nut oder ein Durchgangsloch ist und der Formgebungsschlitz gegenüber der ersten Gleitnutfläche oder der zweiten Gleitnutfläche angeordnet ist, um die erste Gleitnutfläche oder die zweite Gleitnutfläche freizulegen;
einen ersten Schwenkarm (20), wobei zwei Seiten des ersten Schwenkarms jeweils in Kontakt und drehbarer Passung mit der ersten Gleitnutfläche und der zweiten Gleitnutfläche stehen; und
einen zweiten Schwenkarm (30), der drehbar mit dem ersten Träger verbunden ist, wobei der erste Schwenkarm und der zweite Schwenkarm entlang einer Richtung einer Mittellinie des ersten Trägers voneinander beabstandet sind und Drehverbindungsstrukturen des ersten Schwenkarms und des zweiten Schwenkarms beide am ersten Träger integriert sind, wobei
der zweite Schwenkarm über eine Drehwelle und ein Drehwellenloch (143) drehbar mit dem ersten Träger verbunden ist, wobei die Drehwelle in das Drehwellenloch eingesetzt ist, der zweite Schwenkarm mit der Drehwelle versehen ist, das Drehwellenloch am ersten Träger vorgesehen ist, eine Innenfläche des Drehwellenlochs eine einstückig ausgebildete zylindrische Fläche ist, oder die Drehwelle einstückig am ersten Träger angeordnet ist und der zweite Schwenkarm mit dem Drehwellenloch versehen ist; oder
der erste Träger ferner mit einer dritten Gleitnutfläche (144) und einer vierten Gleitnutfläche (145) versehen ist, wobei die dritte Gleitnutfläche und die vierte Gleitnutfläche koaxial angeordnet sind und beide bogenförmige Flächen sind, und wobei zwei gegenüberliegende Seiten des zweiten Schwenkarms jeweils in Kontakt und drehbarer Passung mit der dritten Gleitnutfläche und der vierten Gleitnutfläche stehen.

2. Faltmechanismus nach Anspruch 1, wobei ein Radius der ersten Gleitnutfläche ungleich einem Radius der zweiten Gleitnutfläche ist.

3. Faltmechanismus nach Anspruch 1, wobei der erste Schwenkarm ein erstes Ende aufweist, zwei gegenüberliegende Seiten des ersten Endes jeweils einen ersten Eingriffsabschnitt und einen zweiten Eingriffsabschnitt umfassen, wobei der erste Eingriffsabschnitt und der zweite Eingriffsabschnitt beide Bogenflächen sind, der erste Eingriffsabschnitt an der ersten Gleitnutfläche anliegt und in Gleitpassung mit dieser steht, und der zweite Eingriffsabschnitt an der zweiten Gleitnutfläche anliegt und in Gleitpassung mit dieser steht.

4. Faltmechanismus nach Anspruch 3, wobei das erste Ende mit mindestens zwei ersten Eingriffsabschnitten versehen ist, wobei die mindestens zwei ersten Eingriffsabschnitte in einem Abstand entlang der axialen Richtung der ersten Gleitnutfläche angeordnet sind und jeweils auf zwei Seiten des zweiten Eingriffsabschnitts angeordnet sind, wobei eine Mehrzahl von ersten Gleitnutflächen vorgesehen ist und jeder der ersten Eingriffsabschnitte in Gleitpassung mit einer entsprechenden der ersten Gleitnutflächen steht.

5. Faltmechanismus nach Anspruch 4, wobei der erste Träger ferner mit einer Begrenzungsfläche versehen ist, wobei die erste Gleitnutfläche und die Begrenzungsfläche einander gegenüberliegen und voneinander beabstandet sind, um gemeinsam einen Aufnahmeraum zu definieren, und der erste Eingriffsabschnitt drehbar im Aufnahmeraum aufgenommen ist.

6. Faltmechanismus nach Anspruch 1, wobei der erste Träger einen ersten Trägerkörper und einen auf dem ersten Trägerkörper angeordneten ersten Vorsprung umfasst und die erste Gleitnutfläche auf einer Seite des ersten Vorsprungs angeordnet ist; und
der erste Trägerkörper mit dem Formgebungsschlitz versehen ist, der gegenüber der ersten Gleitnutfläche vorgesehen ist.

7. Faltmechanismus nach Anspruch 6, wobei der erste Träger ferner einen zweiten Vorsprung umfasst, der auf einer Seite des ersten Trägerkörpers angeordnet ist, und die zweite Gleitnutfläche auf einer Seite des zweiten Vorsprungs angeordnet ist.

8. Faltmechanismus nach einem der Ansprüche 1 bis 7, wobei der erste Träger einen ersten Seitenabschnitt und einen zweiten Seitenabschnitt umfasst, wobei der erste Seitenabschnitt und der second Seitenabschnitt jeweils auf zwei Seiten einer Mittellinie des ersten Trägers angeordnet sind, wobei der erste Seitenabschnitt mit der ersten Gleitnutfläche und der zweiten Gleitnutfläche versehen ist, die eine erste Achse aufweisen, der zweite Seitenabschnitt mit der ersten Gleitnutfläche und der zweiten Gleitnutfläche versehen ist, die eine zweite Achse aufweisen, und die Mittellinie des ersten Trägers parallel zur ersten Achse und zur zweiten Achse verläuft; und
der Faltmechanismus mindestens zwei erste Schwenkarme umfasst und die mindestens zwei ersten Schwenkarme jeweils drehbar mit dem ersten Seitenabschnitt und dem zweiten Seitenabschnitt verbunden sind.

9. Faltmechanismus nach einem der Ansprüche 1 bis 7, wobei der erste Träger mit einer ersten Anschlagstruktur versehen ist und die erste Anschlagstruktur dazu konfiguriert ist, den ersten Schwenkarm in einem entfalteten Zustand oder einem zusammengeklappten Zustand des ersten Schwenkarms zu arretieren.

10. Faltmechanismus nach Anspruch 9, wobei der erste Schwenkarm mit einer ersten Montageöffnung versehen ist, die erste Anschlagstruktur einen an dem ersten Träger angeordneten ersten Anschlagblock umfasst, der erste Anschlagblock sich durch die erste Montageöffnung erstreckt und der erste Anschlagblock dazu konfiguriert ist, im entfalteten Zustand oder im zusammengeklappten Zustand des ersten Schwenkarms an dem ersten Schwenkarm anzuliegen.

11. Faltmechanismus nach Anspruch 9, wobei der erste Träger eine Innenfläche und eine Außenfläche aufweist, die einander gegenüberliegend angeordnet sind, der erste Schwenkarm in eine von der Außenfläche wegweisende Richtung geklappt wird und der erste Träger mit einer zweiten Montageöffnung versehen ist; und
die erste Anschlagstruktur einen an dem ersten Träger angeordneten ersten Anschlagblock umfasst, der erste Anschlagblock in der zweiten Montageöffnung aufgenommen ist, der erste Anschlagblock eine von der Innenfläche wegweisende erste Anschlagfläche aufweist und die erste Anschlagfläche dazu konfiguriert ist, im entfalteten Zustand des ersten Schwenkarms an dem ersten Schwenkarm anzuliegen.

12. Faltmechanismus nach Anspruch 9, wobei die erste Anschlagstruktur eine an einer Kante des ersten Trägers angeordnete zweite Anschlagfläche umfasst und die zweite Anschlagfläche dazu konfiguriert ist, im entfalteten Zustand des ersten Schwenkarms an dem ersten Schwenkarm anzuliegen.

13. Faltmechanismus nach Anspruch 1, wobei die dritte Gleitnutenfläche und die vierte Gleitnutenfläche entlang einer axialen Richtung der dritten Gleitnutenfläche voneinander beabstandet sind; und
die beiden gegenüberliegenden Seiten des zweiten Schwenkarms jeweils mit einem dritten Eingriffsabschnitt und einem vierten Eingriffsabschnitt versehen sind, wobei der dritte Eingriffsabschnitt an der dritten Gleitnutenfläche angebracht ist und in Gleitpassung mit dieser steht, und der vierte Eingriffsabschnitt an der vierten Gleitnutenfläche angebracht ist und in Gleitpassung mit dieser steht.

14. Faltmechanismus nach einem der Ansprüche 1 bis 7, wobei der erste Träger mit einer dritten Anschlagfläche und einer vierten Anschlagfläche versehen ist, wobei die dritte Anschlagfläche dazu konfiguriert ist, im entfalteten Zustand des zweiten Schwenkarms an dem zweiten Schwenkarm anzuliegen, und die vierte Anschlagfläche dazu konfiguriert ist, im zusammengeklappten Zustand des zweiten Schwenkarms an dem zweiten Schwenkarm anzuliegen.

15. Faltmechanismus nach Anspruch 14, wobei der zweite Schwenkarm mit einem zweiten Anschlagblock versehen ist und der zweite Anschlagblock dazu konfiguriert ist, im zusammengeklappten Zustand des zweiten Schwenkarms an der vierten Anschlagfläche anzuliegen.

## Revendications

1. Mécanisme de pliage, comprenant :
un premier support (10), dans lequel le premier support est formé d'une seule pièce, le premier support est pourvu intégralement d'une première surface de rainure de coulissement (141) et d'une seconde surface de rainure de coulissement (142), la première surface de rainure de coulissement et la seconde surface de rainure de coulissement sont toutes deux des surfaces arquées et disposées coaxialement, la première surface de rainure de coulissement et la seconde surface de rainure de coulissement sont espacées l'une de l'autre le long d'une direction axiale de la première surface de rainure de coulissement, le premier support (10) est en outre pourvu d'une fente de processus de moulage (15), la fente de processus de moulage est une rainure ou un trou traversant, et la fente de processus de moulage est prévue à l'opposé de la première surface de rainure de coulissement ou de la seconde surface de rainure de coulissement, pour exposer la première surface de rainure de coulissement ou la seconde surface de rainure de coulissement ;
un premier bras oscillant (20), dans lequel deux côtés du premier bras oscillant sont respectivement en contact et en ajustement rotatif avec la première surface de rainure de coulissement et la seconde surface de rainure de coulissement ; et
un second bras oscillant (30), relié de manière rotative au premier support, dans lequel le premier bras oscillant et le second bras oscillant sont espacés l'un de l'autre le long d'une direction d'une ligne centrale du premier support, et des structures de connexion rotative du premier bras oscillant et du second bras oscillant sont toutes deux intégrées sur le premier support, dans lequel
le second bras oscillant est relié de manière rotative au premier support par l'intermédiaire d'un arbre rotatif et d'un trou d'arbre rotatif (143), l'arbre rotatif est inséré dans le trou d'arbre rotatif, le second bras oscillant est pourvu de l'arbre rotatif, le trou d'arbre rotatif est prévu sur le premier support, une surface intérieure du trou d'arbre rotatif est une surface cylindrique formée d'une seule pièce, ou l'arbre rotatif est disposé intégralement sur le premier support, et le second bras oscillant est pourvu du trou d'arbre rotatif ; ou
le premier support est en outre pourvu d'une troisième surface de rainure de coulissement (144) et d'une quatrième surface de rainure de coulissement (145), la troisième surface de rainure de coulissement et la quatrième surface de rainure de coulissement sont disposées coaxialement et sont toutes deux des surfaces arquées, et deux côtés opposés du second bras oscillant sont respectivement en contact et en ajustement rotatif avec la troisième surface de rainure de coulissement et la quatrième surface de rainure de coulissement.

2. Mécanisme de pliage selon la revendication 1, dans lequel un rayon de la première surface de rainure de coulissement n'est pas égal à un rayon de la seconde surface de rainure de coulissement.

3. Mécanisme de pliage selon la revendication 1, dans lequel le premier bras oscillant présente une première extrémité, deux côtés opposés de la première extrémité comprenant chacun une première partie d'accouplement et une seconde partie d'accouplement, la première partie d'accouplement et la seconde partie d'accouplement étant toutes deux des surfaces arquées, la première partie d'accouplement étant fixée à et en ajustement coulissant avec la première surface de rainure de coulissement, et la seconde partie d'accouplement étant fixée à et en ajustement coulissant avec la seconde surface de rainure de coulissement.

4. Mécanisme de pliage selon la revendication 3, dans lequel la première extrémité est pourvue d'au moins deux premières parties d'accouplement, lesdites au moins deux premières parties d'accouplement étant disposées à un intervalle le long de la direction axiale de la première surface de rainure de coulissement et disposées respectivement sur deux côtés de la seconde partie d'accouplement, une pluralité de premières surfaces de rainure de coulissement étant prévues, et chacune des premières parties d'accouplement étant en ajustement coulissant avec une surface correspondante parmi les premières surfaces de rainure de coulissement.

5. Mécanisme de pliage selon la revendication 4, dans lequel le premier support est en outre pourvu d'une surface de limitation, la première surface de rainure de coulissement et la surface de limitation étant opposées et espacées l'une de l'autre pour définir conjointement un espace de logement, et la première partie d'accouplement étant reçue de manière rotative dans l'espace de logement.

6. Mécanisme de pliage selon la revendication 1, dans lequel le premier support comprend un premier corps de support et un premier bossage disposé sur le premier corps de support, et la première surface de rainure de coulissement est disposée sur un côté du premier bossage ; et
le premier corps de support est pourvu de la fente de processus de moulage disposée à l'opposé de la première surface de rainure de coulissement.

7. Mécanisme de pliage selon la revendication 6, dans lequel le premier support comprend en outre un second bossage disposé sur un côté du premier corps de support, et la seconde surface de rainure de coulissement est disposée sur un côté du second bossage.

8. Mécanisme de pliage selon l'une quelconque des revendications 1 à 7, dans lequel le premier support comprend une première partie latérale et une seconde partie latérale, la première partie latérale et la seconde partie latérale étant respectivement situées sur deux côtés d'une ligne centrale du premier support, la première partie latérale étant pourvue de la première surface de rainure de coulissement et de la seconde surface de rainure de coulissement qui ont un premier axe, la seconde partie latérale étant pourvue de la première surface de rainure de coulissement et de la seconde surface de rainure de coulissement qui ont un second axe, et la ligne centrale du premier support étant parallèle au premier axe et au second axe ; et
le mécanisme de pliage comprend au moins deux premiers bras oscillants, et lesdits au moins deux premiers bras oscillants sont respectivement reliés de manière rotative à la première partie latérale et à la seconde partie latérale.

9. Mécanisme de pliage selon l'une quelconque des revendications 1 à 7, dans lequel le premier support est pourvu d'une première structure de butée, et la première structure de butée est configurée pour bloquer le premier bras oscillant dans un état déplié ou un état plié du premier bras oscillant.

10. Mécanisme de pliage selon la revendication 9, dans lequel le premier bras oscillant est pourvu d'un premier trou de montage, la première structure de butée comprend un premier bloc de butée agencé sur le premier support, le premier bloc de butée s'étend à travers le premier trou de montage, et le premier bloc de butée est configuré pour venir en butée contre le premier bras oscillant dans l'état déplié ou l'état plié du premier bras oscillant.

11. Mécanisme de pliage selon la revendication 9, dans lequel le premier support a une surface interne et une surface externe agencées opposées l'une à l'autre, le premier bras oscillant est plié dans une direction s'éloignant de la surface externe, et le premier support est pourvu d'un second trou de montage ; et
la première structure de butée comprend un premier bloc de butée agencé sur le premier support, le premier bloc de butée est reçu dans le second trou de montage, le premier bloc de butée a une première surface de butée orientée à l'opposé de la surface interne, et la première surface de butée est configurée pour venir en butée contre le premier bras oscillant dans l'état déplié du premier bras oscillant.

12. Mécanisme de pliage selon la revendication 9, dans lequel la première structure de butée comprend une seconde surface de butée agencée sur un bord du premier support, et la seconde surface de butée est configurée pour venir en butée contre le premier bras oscillant dans l'état déplié du premier bras oscillant.

13. Mécanisme de pliage selon la revendication 1, dans lequel la troisième surface de rainure de coulissement et la quatrième surface de rainure de coulissement sont espacées l'une de l'autre le long d'une direction axiale de la troisième surface de rainure de coulissement ; et
les deux côtés opposés du second bras oscillant sont pourvus respectivement d'une troisième partie d'accouplement et d'une quatrième partie d'accouplement, la troisième partie d'accouplement est fixée à et en ajustement coulissant avec la troisième surface de rainure de coulissement, et la quatrième partie d'accouplement est fixée à et en ajustement coulissant avec la quatrième surface de rainure de coulissement.

14. Mécanisme de pliage selon l'une quelconque des revendications 1 à 7, dans lequel le premier support est pourvu d'une troisième surface de butée et d'une quatrième surface de butée, la troisième surface de butée est configurée pour venir en butée contre le second bras oscillant dans un état déplié du second bras oscillant, et la quatrième surface de butée est configurée pour venir en butée contre le second bras oscillant dans un état plié du second bras oscillant.

15. Mécanisme de pliage selon la revendication 14, dans lequel le second bras oscillant est pourvu d'un second bloc de butée, et le second bloc de butée est configuré pour venir en butée contre la quatrième surface de butée dans l'état plié du second bras oscillant.
